# EUROPÄISCHE PATENTSCHRIFT

(11) **EP 4 287 116 B1**
(45) Veröffentlichungstag und Bekanntmachung des Hinweises auf die Patenterteilung: **02.09.2026**
(21) Anmeldenummer: 23166616.5
(22) Anmeldetag: 04.04.2023
(51) Int. Cl.: G06T 7/00

(54) **VERFAHREN UND VORRICHTUNG ZUR DETEKTION VON ANOMALIEN IN ZWEIDIMENSIONALEN DIGITALEN BILDERN VON PRODUKTEN**
METHOD AND APPARATUS FOR DETECTING ANOMALIES IN TWO-DIMENSIONAL DIGITAL IMAGES OF PRODUCTS
PROCÉDÉ ET DISPOSITIF DE DÉTECTION D'ANOMALIES DANS DES IMAGES NUMÉRIQUES BIDIMENSIONNELLES DE PRODUITS

(30) Priorität: 12.04.2022 DE 102022108979
(43) Veröffentlichungstag der Anmeldung: 06.12.2023
(73) Patentinhaber: WIPOTEC GmbH, 67657 Kaiserslautern (DE)
(72) Erfinder: Siegrist, Michael, 67659 Kaiserslautern (DE); Bastuck, Manuel, 67659 Kaiserslautern (DE)
(74) Vertreter: Eder Schieschke & Partner mbB

(56) Entgegenhaltungen:
- US-A1- 2007 098 245
- US-A1- 2019 342 306
- US-B2- 7 844 100

## Beschreibung

Die Erfindung betrifft ein Verfahren zur Detektion von Anomalien in digitalen Bildern von Produkten mit den Merkmalen der Oberbegriffe der Patentansprüche 1 bzw. 2. Weiterhin betrifft die Erfindung eine Vorrichtung sowie ein Computerprogrammprodukt zur Durchführung des Verfahrens.

Bei der Herstellung von Produkten besteht vielfach der Wunsch bzw. die Notwendigkeit, die hergestellten Produkte anschließend einer Prüfung zu unterziehen, ob das Produkt Anomalien, insbesondere Fehlstellen, Fremdkörper oder dergleichen, aufweist. Beispielsweise kann sich in der Lebensmittelindustrie bei der Herstellung von Joghurt oder Käse die Aufgabe stellen, das fertige Produkt daraufhin zu untersuchen, ob sich unerwünschte Fremdkörper oder andere unerwünschte Materialbereiche innerhalb des Produkts befinden. Zur Lösung dieses Problems werden in der Praxis Inspektionsvorrichtungen verwendet, welche das Produkt mit einer elektromagnetischen Strahlung durchstrahlen, insbesondere mit Strahlung im Röntgenspektrum. Auf diese Weise wird ein digitales Bild des Produkts erzeugt, welches nicht nur Informationen über die äußeren geometrischen Abmessungen bzw. die Oberfläche des Produkts beinhaltet, sondern auch über das Innere des Produkts. Zu detektierende Anomalien können dabei, abhängig von deren Dämpfung, beim Durchstrahlen zu Bildbereichen führen, die gegenüber den Bildbereichen, die keine Anomalien aufweisen (im Folgenden als "Bereiche" bezeichnet), einen höheren oder geringeren "Grauwert", d.h. Pixelwert aufweisen als die Gutbereiche. In der vorliegenden Beschreibung wird der Begriff "Grauwert" für die Information verwendet, die der Detektor abhängig von der auf die einzelnen Pixel auftreffenden Strahlungsleistung bzw. der entsprechenden Strahlungsenergie, die während der maßgeblichen Belichtungszeit detektiert wird, erzeugt, unabhängig davon, in welcher Farbe oder Art und Weise die Pixelwerte in dem betreffenden digitalen Bild darstellbar sind.

Zu einer derartigen Inspektion von Produkten sind auch Vorrichtungen bzw. Verfahren bekannt, bei denen das zu untersuchende Produkt nicht vollständig durchstrahlt wird (d.h. die Strahlungsquelle und der Detektor liegen auf gegenüberliegenden Seiten des Produkts), sondern bei denen die Strahlung in das zu untersuchende Produkt tief genug eindringt und im Produkt "reflektiert" wird, wobei diese "Reflexion" physikalisch durch eine Streuung der in einen Volumenbereich eindringenden Strahlung oder durch Erzeugung einer Fluoreszenzstrahlung in dem Volumenbereich bewirkt wird. Bei derartigen Inspektionsvorrichtungen können sich die Strahlungsquelle und der Detektor auch auf derselben Seite des zu untersuchenden Produkts befinden.

Das zu untersuchende Produkt kann dabei in Form eines Stückguts beliebiger Art oder auch als Schüttgut vorliegen, welches mittels einer Fördervorrichtung durch die Inspektionsvorrichtung gefördert wird.

Als Detektoren für die Strahlung werden in Produktlinien, in denen die zu untersuchenden Produkte entlang eines Förderwegs bewegt werden, häufig Zeilendetektoren verwendet, die eine oder mehrere Detektorzeilen mit jeweils einer vorbestimmten Anzahl von Pixeln aufweisen. Die digitalen Bilder werden dabei, üblicherweise mit konstanter Geschwindigkeit, durch eine derartige Scanvorrichtung bewegt, wobei ein digitales Bild aus einer Vielzahl von detektierten Zeilen zusammengesetzt wird. Es ist jedoch selbstverständlich ebenfalls möglich, anstelle eines Zeilenscanners einen Flächenscanner zu verwenden. Dabei kann das digitale Bild des zu untersuchenden Produkts mittels eines einzigen Detektionsvorgangs (d.h. eines einzigen "Belichtungsvorgangs") erfasst werden.

Derart erzeugte digitale Bilder werden üblicherweise automatisiert daraufhin untersucht, ob Anomalien innerhalb des betreffenden Produkts vorliegen. Dabei kann das unmittelbar mittels des durchgeführten Scanvorgangs erzeugte Bild vor einer derartigen Untersuchung bearbeitet bzw. aufbereitet werden. Hierzu kann das ursprüngliche Bild beispielsweise digital gefiltert werden, wobei das hierfür verwendete Filter eine Kontrastverbesserung bewirken kann.

Es ist ebenfalls möglich, bereits bei der Erzeugung der Bilder Maßnahmen zur Verbesserung des Kontrastes, insbesondere im Hinblick auf eine Detektion von Anomalien, zu treffen. Beispielsweise könnte ein Dual-Energy-Verfahren verwendet werden, wobei die beiden Spektren so gewählt sind, dass sich durch eine Überlagerung der betreffenden Teilbilder eine Kontrastverbesserung ergibt.

Es ist weiterhin möglich, spektral auflösende Detektoren zu verwenden, die eine Mehrzahl von Bildern erzeugen, wobei jedes Bild aus Pixeln zusammengesetzt ist, deren Grauwert der Strahlungsenergie in jeweils einem bestimmten spektralen Ausschnitt der detektierten Strahlung entspricht. Für das Detektieren von Anomalien kann dann ein Bild verwendet werden, welches aus allen oder ausgewählten Teilbildern eines solchen spektral auflösenden Detektors erzeugt wird, beispielsweise durch gewichtete Addition der betreffenden Pixelwerte. Es kann jedoch auch jedes Teilbild separat daraufhin untersucht werden, ob eine Anomalie vorliegt.

Für die automatisierte Untersuchung des digitalen Bildes des Produkts sind Verfahren bekannt, bei denen ein Schwellwert festgelegt wird, wobei eine Anomalie dann vorliegt, wenn der Grauwert wenigstens eines Pixels größer ist als der Schwellwert. Hierzu werden in einem Lernprozess üblicherweise eine vorbestimmte Anzahl von Gutprodukten (d.h. Produkten, die keine Anomalie aufweisen) desselben Produkttyps gescannt, um eine Information über die üblicherweise in solchen Gutprodukten auftretenden maximalen Grauwerte zu erhalten. Abhängig hiervon wird dann der Schwellwert so festgelegt, dass ein vorgegebener Wert für die Fehlauswurfsrate (beispielsweise ein Prozent oder ein Promille) eingehalten wird. Die Fehlauswurfsrate ist dabei die Wahrscheinlichkeit, mit der ein Gutprodukt als "Schlechtprodukt" erkannt wird. Diese (theoretische) Fehlauswurfsrate lässt sich durch das Bestimmen der empirischen Häufigkeit überprüfen, mit der ein Gutprodukt als Schlechtprodukt identifiziert wird. Hierzu kann eine ausreichende Anzahl von digitalen Bildern von Gutprodukten erzeugt und unter Verwendung des festgelegten Schwellwertes überprüft werden, wobei die empirische Fehlauswurfsrate als Quotient der als Schlechtprodukt erkannten Gutprodukte durch die Gesamtzahl der Gutprodukte bestimmt wird.

Das Bestimmen eines solchen Schwellwertes erfordert also einen aufwändigen Lernprozess, in welchem eine relativ hohe Anzahl digitaler Bilder von Gutprodukten erzeugt werden muss. Dies ist jedoch nachteilig, da zunächst mittels der betreffenden Produktionslinie eine derartige Anzahl von Gutprodukten erzeugt werden muss, d.h. es geht entsprechend Produktionszeit verloren. Zudem kann kaum vorhergesagt werden, wie hoch die Anzahl der für den Einlernprozess erforderlichen Gutprodukte sein muss, um den Schwellwert zuverlässig so festlegen zu können, dass die gewünschte Fehlauswurfsrate eingehalten wird.

Aus der US 2007/0098245 A1 ist es für das Detektieren von Oberflächendefekten bekannt, Bilder der Oberflächen zu erstellen und diese zu analysieren. Für das Detektieren von Defekten wird ein Schwellwert verwendet, welcher unter Vorgabe einer Falsch-Positiv-Rate bestimmt werden kann. Hierzu werden Sample-Bilder verwendet, aus welchen eine Verteilung der Intensitätswerte der Pixel bzw. eine Verteilung entsprechender Residuenwerte erstellt wird. Zur Bestimmung des Schwellwerts wird die Fläche unter der Verteilung verwendet, die einer Falsch-Positiv-Rate entspricht.

Die US 7,844,100 B2 beschreibt ein Verfahren zur Inspektion eines Samples, insbesondere eines Wafers bei der Wafer-Herstellung. Bei diesem Verfahren werden in einer Einlern-Phase Bilder verwendet, die nach einer Vorverarbeitung einer Bedienperson angezeigt werden. Die Bedienperson kann anfänglich vorgegebene Schwellwerte für verschiedene Eigenschaften von Defekten so verändern, dass nur noch tatsächlich relevante Defekte als solche erkannt werden. Nach einer weiteren Ausführungsform können Schwellwerte auch automatisch aus den Anzahlen der von einer Bedienperson klassifizierten Defekten, nämlich der Anzahl von als tatsächlich relevant klassifizierten Defekten und der Anzahl von als Falsch-Alarm klassifizierten Defekten berechnet werden.

Ausgehend von diesem Stand der Technik liegt der Erfindung die Aufgabe zugrunde, ein Verfahren zur Detektion von Anomalien in digitalen Bildern von gescannten Produkten zu schaffen, bei dem ein automatisierter Prozess für das Festlegen eines Schwellwertes, welcher für das Detektieren einer Anomalie verwendet wird, schnell und zuverlässig mit einer geringeren Anzahl von digitalen Bildern durchgeführt werden kann. Weiterhin liegt der Erfindung die Aufgabe zugrunde, eine Vorrichtung sowie ein Computerprogrammprodukt zur Durchführung des Verfahrens zu schaffen.

Die Erfindung löst diese Aufgabe mit den Merkmalen der Patentansprüche 1 und 2 bzw. 16 und 17.

Die Erfindung geht von der Erkenntnis aus, dass ein Schwellwert zur Detektion von Anomalien in digitalen Bildern von Produkten in einem Einlernprozess mit relativ wenigen digitalen Bildern mit guter Zuverlässigkeit bestimmt werden kann, wenn eine Annahme über die statistische Verteilung der größten bzw. kleinsten Werte (im Folgenden als Extremwerte bezeichnet) einer spezifischen Größe getroffen wird, die für die Erkennung von Anomalien in zu untersuchenden digitalen Bildern verwendet wird. Hierzu wird erfindungsgemäß die Annahme getroffen, dass sich die Verteilung der Extremwerte ausreichend gut mit einer vorgegebenen, zu parametrierenden Wahrscheinlichkeitsdichtefunktion beschreiben lässt (mit dem Begriff "parametrieren" wird in dieser Beschreibung das Ermitteln bzw. Festlegen von Werten für Parameter der Wahrscheinlichkeitsdichtefunktion bezeichnet). Mit anderen Worten, es wird die Annahme getroffen, dass die Elemente der Stichprobe (d.h. die Menge der jeweiligen Maxima oder Minima) der jeweils vorgegebenen Wahrscheinlichkeitsdichtefunktion genügen bzw. deren Auftrittswahrscheinlichkeit gut durch diese Wahrscheinlichkeitsdichtefunktion beschrieben wird. Unter Verwendung der Elemente der Stichprobe werden Schätzwerte für alle zu bestimmenden Parameter (d.h. für alle nicht ggf. bereits vorgegebenen Parameter) der Wahrscheinlichkeitsdichtefunktion ermittelt. Häufig weisen Wahrscheinlichkeitsdichtefunktionen zwei Parameter auf, im Fall der Normalverteilung beispielsweise den Erwartungswert µ und die Standardabweichung σ bzw. die Varianz σ².

Nach der Erfindung wird eine verallgemeinerte Extremwertverteilung, insbesondere eine vorgegebene Variante der, also eine Weibull-Verteilung, eine Fréchet-Verteilung oder eine Gumbel-Verteilung, verwendet, um die Verteilung der Maximal- oder Minimalwerte der spezifischen Größe zu beschreiben. Selbstverständlich kann auch die verallgemeinerte Extremwertverteilung selbst mit ihren drei Parametern verwendet werden.

Die Erfindung ist dabei nicht beschränkt auf den eingangs erläuterten Fall, in dem die Pixelwerte, insbesondere jeder einzelne Pixelwert, in Verbindung mit einem Schwellwert für die Pixelwerte für die Entscheidung herangezogen werden, ob das zu untersuchende digitale Bild eine Anomalie enthält.

Vielmehr verallgemeinert die Erfindung das dieser Vorgehensweise zugrundeliegende Prinzip. Das zu untersuchende Bild wird in eine oder mehrere Regionen aufgeteilt, wobei jeder Region wenigstens dieselbe eine Eigenschaft oder dieselben mehreren Eigenschaften zugeordnet werden. Dabei umfasst jede Region entweder genau einen oder mehrere Pixel, wobei mehrere Pixel nur dann derselben Region zugeordnet werden, wenn diese benachbart sind (d.h. jedes Pixel der Region weist mindestens ein unmittelbar benachbartes Pixel derselben Region auf). Als benachbart zu einem betrachteten Pixel kann dabei jedes Pixel angesehen werden, welches mit einer Kante einer Kante des betrachteten Pixels benachbart ist (d.h. die Pixel oben, unten, links und rechts des betrachteten Pixels), oder (zusätzlich) jedes Pixel, welches mit einer Ecke einer Ecke des betrachteten Pixels benachbart ist (d.h. die Pixel in der Verlängerung der Diagonalen des betrachteten Pixels). Für jede Eigenschaft der zuvor festgelegten Regionen wird ein Wert ermittelt, der die jeweilige Eigenschaft beschreibt. Werden den Regionen mehrere Eigenschaften zugeordnet, so können entweder separate Werte für jede Eigenschaft bestimmt werden oder es werden die Werte von zwei oder mehreren Eigenschaften zu einem kombinierten Wert verknüpft, beispielsweise durch eine arithmetische Operation (z.B. Multiplikation oder Division oder gewichtete Addition).

Das Detektieren von Anomalien erfolgt bei dieser Verallgemeinerung durch das Bestimmen eines Schwellwertes für jede Eigenschaft oder für jede Kombination von mehreren Eigenschaften.

In einem Extremfall kann das gesamte Bild als eine Region aufgefasst bzw. festgelegt werden. Wird dabei noch als spezifische Größe zur Detektion von Anomalien der Pixelwert jedes Pixels daraufhin untersucht, ob der Wert einen vorgegebenen Schwellwert für den Pixelwert über- oder unterschreitet, so führt dies zu demselben Ergebnis wie wenn jedes Pixel als Region mit genau einem Pixel aufgefasst bzw. festgelegt wird. In diesem Fall führt die vorstehend erläuterte Verallgemeinerung unter Verwendung von vordefinierten Regionen und zugeordneten beliebigen Eigenschaften wieder zu der bisher üblichen Vorgehensweise, wonach die einzelnen Pixel hinsichtlich ihrer Pixelwerte daraufhin untersucht werden, ob diese einen Schwellwert für die Pixelwerte über- oder unterschreiten.

Die Bestimmung des Schwellwertes für eine Eigenschaft bzw. des Schwellwertes für eine Kombination von Eigenschaften erfolgt erfindungsgemäß in einem Einlernprozess. Die für die Bestimmung des Schwellwertes nötigen Bilder können bereits vorab in einer ausreichenden, vorgegebenen Anzahl erzeugt werden oder bedarfsweise, d.h. es werden sukzessive so lange ein oder mehrere neue digitale Bilder erzeugt, bis eine ausreichende Anzahl erreicht ist. Es sei an dieser Stelle darauf hingewiesen, dass der Einlernprozess zu jeder beliebigen Zeit durchgeführt werden kann und insbesondere nicht vor der (produktiven) Inbetriebnahme einer entsprechenden Vorrichtung oder Anlage ausgeführt werden muss. Insbesondere kann der Prozess auch während des produktiven Betriebs einer Anlage ausgeführt werden, insbesondere dann, wenn dabei Gutprodukte oder zumindest Gut-Prozessprodukte erzeugt werden (siehe unten). Der Einlernprozess wird in einer bevorzugten Ausführungsform der Erfindung automatisiert durchgeführt. Es ist jedoch ebenfalls möglich, bestimmte Schritte des Prozesses, wie das Erzeugen der digitalen Bilder (darunter fällt auch eine Bearbeitung von ursprünglich detektierten digitalen Bildern), vollständig manuell oder manuell unterstützt durchzuführen.

Nach einer Variante des Verfahrens nach der Erfindung wird der Einlernprozess bzw. der automatisierte Prozess zur Bestimmung des Schwellwertes für die wenigstens eine Eigenschaft unter der Verwendung von digitalen Bildern von Gutprodukten durchgeführt, welche keine Anomalien aufweisen. Wie bereits vorstehend erwähnt, können die Bilder, bei denen es sich um ein unmittelbares Ergebnis eines Scanvorgangs handeln kann, zunächst bearbeitet bzw. für das Detektionsverfahren aufbereitet werden. Dabei kann auch ein geeigneter Ausschnitt eines ermittelten Gesamtbildes erzeugt werden, welcher das Produkt insgesamt oder vorgegebene Teilbereiche umfasst. Der so erzeugte Ausschnitt oder auch das gesamte erfasste digitale Bild kann auch einer digitalen Filterung unterzogen werden, beispielsweise um eine Kontrastverbesserung mit dem Ziel zu bewirken, Anomalien noch stärker hervorzuheben. Soll ein endlos produziertes Produkt oder ein Schüttprodukt auf Anomalien untersucht werden, so können digitale Bilder von Abschnitten eines solchen Produkts erzeugt und diese genauso verarbeitet und untersucht werden, wie dies mit Bildern von vereinzelten Produkten (oder Ausschnitten derartiger Produkte) möglich ist.

Es sei an dieser Stelle erwähnt, dass es nicht zwingend erforderlich ist, den automatisierten Prozess ausschließlich mit Gutprodukten durchzuführen. Vielmehr kann der automatisierte Prozess auch mit Bildern von Produkten durchgeführt werden, wie sie in einer Produktionslinie erzeugt werden, ohne dass sichergestellt ist, dass keines der Produkte ein Schlechtprodukt darstellt. Anstelle von Gutprodukten können somit auch solche als "Gut-Prozessprodukte" bezeichneten Produkte verwendet werden, wobei eine Anzahl von Gut-Prozessprodukten überwiegend aus Gutprodukten besteht und nur zu einem kleineren Teil aus Schlechtprodukten. Denn in der Praxis ist davon auszugehen, dass der Anteil von Schlechtprodukten in einer Anzahl von Gut-Prozessprodukten gering ist, insbesondere kleiner ist als 25 %, vorzugsweise kleiner als 10 %, höchst vorzugsweise kleiner als 5 %.

Im Rahmen des automatisierten Prozesses werden entweder eine fest vorgegebene Anzahl von digitalen Bildern oder eine im Verlauf des automatisierten Prozesses zu bestimmende Anzahl von Bildern von Gutprodukten bzw. Gut-Prozessprodukten erzeugt bzw. verwendet.

Für jedes der digitalen Bilder werden die eine oder die mehreren Regionen festgelegt und für jede Region der Wert der mindestens einen Eigenschaft oder der kombinierte Wert für die mehreren Eigenschaften bestimmt. Der maximale Wert dieser Werte wird als Maximal-Stichprobenwert einer Maximalwert-Stichprobe und/oder der minimale Wert dieser Werte wird als Minimal-Stichprobenwert einer Minimalwert-Stichprobe bestimmt.

Dabei können solche Extremwerte, die unplausibel sind oder eindeutig auf einen Fehler hinweisen, ausgeschlossen werden. Beispielsweise können bei der Ermittlung der Extremwerte solche Pixelwerte, die einen absoluten Maximalwert oder einen absoluten Minimalwert der verwendeten Grauwertskala aufweisen, ausgeschlossen werden, da ein entsprechender Minimalwert, beispielsweise ein Wert von 0, auf ein defektes Pixel des Detektors hinweisen kann und ein Maximalwert auf ein übersteuertes Pixel des Detektors.

Die so bestimmten Extremwerte stellen die oben erwähnte Stichprobe dar und können, beispielsweise in einer Liste, gespeichert werden (ggf. separat für die Minimalwerte und Maximalwerte).

Anschließend werden unter Verwendung der Maximal-Stichprobenwerte Schätzwerte für alle freien, nicht vorgegebenen Parameter der zur Beschreibung der Maximalwert-Stichprobe vorgegebenen Wahrscheinlichkeitsdichtefunktion und/oder unter Verwendung der Minimal-Stichprobenwerte Schätzwerte für alle freien, nicht vorgegebenen Parameter einer zur Beschreibung der Minimalwert-Stichprobe vorgegebenen Wahrscheinlichkeitsdichtefunktion bestimmt. Hierfür wird ein statistisches Schätzverfahren verwendet.

Da ein sinnvolles Ergebnis eines statistischen Schätzverfahrens, insbesondere unter Verwendung einer Schätzfunktion (auch als statistischer Schätzer bezeichnet), nur zu erwarten ist, wenn die Stichprobe eine Mindestanzahl von Werten umfasst, wird man üblicherweise eine solche Mindestanzahl vorgeben, was wiederum eine entsprechende Mindestanzahl von digitalen Bildern bedingt.

Ein wesentlicher Punkt der Erfindung besteht darin, dass eine Rate vorgegeben wird, mit der in zu untersuchenden Bildern (bei der Durchführung des Verfahrens unter Verwendung des Schwellwertes) fälschlicherweise eine Maximal-Anomalie detektiert wird, oder eine Rate, mit der in zu untersuchenden Bildern (bei der Durchführung des Verfahrens unter Verwendung des Schwellwertes) richtigerweise keine Maximal-Anomalie detektiert wird, und/oder dass eine Rate vorgegeben wird, mit der in zu untersuchenden Bildern (bei der Durchführung des Verfahrens unter Verwendung des Schwellwertes) fälschlicherweise eine Minimal-Anomalie detektiert wird, oder eine Rate, mit der in zu untersuchenden Bildern (bei der Durchführung des Verfahrens unter Verwendung des Schwellwertes) richtigerweise keine Minimal-Anomalie detektiert wird. Der zu bestimmende Maximal- oder Minimalschwellwert kann also so bestimmt werden, dass die vorgegebene Rate eingehalten wird.

Unter dem Begriff einer Rate wird dabei der Quotient aus der Anzahl der Gutprodukte verstanden, die bei Anwendung des Tests das betreffende Raten-Kriterium erfüllen, und einer vorgegebenen Gesamtanzahl der Gutprodukte bzw. Prozessprodukte. Die Rate, mit der in zu untersuchenden Bildern fälschlicherweise eine Maximal- oder Minimal-Anomalie detektiert wird, entspricht damit dem in der Praxis oftmals verwendeten Begriff "Fehlauswurfsrate". Die Rate, mit der in zu untersuchenden Bildern fälschlicherweise eine Maximal- bzw. Minimal-Anomalie detektiert wird, und die Rate, mit der in einem zu untersuchenden Bild richtigerweise keine Maximal- bzw. Minimal-Anomalie erkannt wird, ergeben in Summe jeweils 1. Im Betrieb einer Anlage können diese Raten auch als gleitender Wert ermittelt werden, also z.B. über die Anzahl N der zuletzt geprüften Produkte.

Ist die vorgegebene Wahrscheinlichkeitsdichtefunktion mittels des Schätzverfahrens parametriert, so kann der Maximal-Schwellwert unter Verwendung der zuvor parametrierten Wahrscheinlichkeitsdichtefunktion oder einer dieser entsprechenden Verteilungsfunktion derart bestimmt werden, dass die Wahrscheinlichkeit für das Auftreten eines maximalen Wertes, der größer oder gleich dem Maximal-Schwellwert ist, der betreffenden vorgegebenen Rate entspricht, mit der in zu untersuchenden Bildern fälschlicherweise eine Maximal -Anomalie detektiert wird, oder dass die Wahrscheinlichkeit für das Auftreten eines maximalen Wertes, der kleiner oder gleich dem Maximal-Schwellwert ist, der vorgegebenen Rate entspricht, mit der in einem zu untersuchenden Bild richtigerweise keine Maximal -Anomalie erkannt wird. Mit anderen Worten, der Maximal-Schwellwert kann so bestimmt werden, dass die Fläche unter der Wahrscheinlichkeitsdichtefunktion oberhalb des Maximal-Schwellwertes bzw. die Fläche unter der Wahrscheinlichkeitsdichtefunktion unterhalb des Maximal-Schwellwertes der betreffenden vorgegebenen Rate entspricht.

Analog hierzu kann der Minimal-Schwellwert unter Verwendung der zuvor parametrierten Wahrscheinlichkeitsdichtefunktion oder einer dieser entsprechenden Verteilungsfunktion derart bestimmt werden, dass die Wahrscheinlichkeit für das Auftreten eines minimalen Wertes, der kleiner oder gleich dem Minimal-Schwellwert ist, einer vorgegebenen Rate entspricht, mit der in zu untersuchenden Bildern fälschlicherweise eine Minimal-Anomalie detektiert wird, oder dass die Wahrscheinlichkeit für das Auftreten eines minimalen Wertes, der größer oder gleich dem Minimal-Schwellwert ist, einer vorgegebenen Rate entspricht, mit der in einem Gutprodukt richtigerweise keine Minimal-Anomalie erkannt wird. Mit anderen Worten, der Minimal-Schwellwert kann so bestimmt werden, dass die Fläche unter der betreffenden Wahrscheinlichkeitsdichtefunktion unterhalb des Minimal-Schwellwertes bzw. die Fläche unter der Wahrscheinlichkeitsdichtefunktion oberhalb des Minimal-Schwellwertes der betreffenden vorgegebenen Rate entspricht.

Zur Bestimmung der Fläche kann selbstverständlich das Integral über die Wahrscheinlichkeitsdichtefunktion verwendet werden, wobei das Integral zu bilden ist von dem betreffenden Schwellwert bis zu einer oberen Grenze des Definitionsintervalls der Wahrscheinlichkeitsdichtefunktion (z.B. unendlich oder einem vorgegebenen oberen Grenzwert, oberhalb dessen sich der Wert des Integrals, d.h. der Fläche, nur noch weniger als eine vorgegebene Fehlerschranke ändert) bzw. von einer unteren Grenze des Definitionsintervalls (z.B. minus unendlich oder einem vorgegebenen unteren Grenzwert, unterhalb dessen sich der Wert des Integrals, d.h. der Fläche, nur noch weniger als eine vorgegebene Fehlerschranke ändert) bis zum Schwellwert.

Selbstverständlich kann anstelle des Berechnens des Integrals, wie vorstehend ausgeführt, auch auf die Verteilungsfunktion der betreffenden Wahrscheinlichkeitsdichtefunktion zurückgegriffen werden, da die Verteilungsfunktion den Wert des Integrals über die Wahrscheinlichkeitsdichtefunktion von minus unendlich bzw. der unteren Grenze des Definitionsintervalls der Wahrscheinlichkeitsdichtefunktion bis zu dem betreffenden Schwellwert darstellt. Die maßgebliche Fläche unter der Wahrscheinlichkeitsdichtefunktion, d.h. der Wert des Integrals bzw. der Wert der Verteilungsfunktion, entspricht somit der (theoretischen) Wahrscheinlichkeit, mit welcher ein maximaler bzw. minimaler Wert einer Eigenschaft der Regionen eines Bildes eines Gutprodukts kleiner oder gleich dem betreffenden Schwellwert ist. Soll die Wahrscheinlichkeit berechnet werden, mit der ein maximaler bzw. minimaler Wert größer oder gleich dem Schwellwert ist, so muss hierzu lediglich die so berechnete Wahrscheinlichkeit von 1 subtrahiert werden.

Da für diese Berechnungen der Wert der Fläche bzw. des Integrals bzw. der Verteilungsfunktion vorgegeben wird, muss die entsprechende Umkehrfunktion verwendet werden. Diese Berechnungen können entweder analytisch oder mittels eines numerischen Verfahrens erfolgen. Nach einer weiteren Variante des Verfahrens nach der Erfindung kann der automatisierte Prozess auch mittels digitaler Bilder von Schlechtprodukten durchgeführt werden. In jedem ("vorsätzlich" erzeugten) Schlechtprodukt ist wenigstens eine solche Anomalie enthalten, wie sie bei dem Produkttyp, für den das erfindungsgemäße Verfahren zur Detektion von Anomalien eingesetzt werden soll, tatsächlich auftreten kann. Die erzeugten Anomalien sollten dabei ein Spektrum abdecken, wie es in der Praxis auftreten kann.

Ist bekannt, wie derartige Anomalien in den zu untersuchenden digitalen Bildern beschaffen sind, insbesondere welche maximalen bzw. minimalen Werte die Eigenschaften von Regionen annehmen können, welche als Anomalien erkannt werden sollen, so ist es auch möglich, digitale Bilder für die Durchführung des Einlernprozesses künstlich zu erzeugen, wobei entsprechende Anomalien auch digital in die Bilder von Gutprodukten eingeblendet werden können. Um hierbei zu sinnvollen Schwellwerten zu gelangen, ist jedoch eine ausreichende Kenntnis über die in der Praxis auftretenden Anomalien erforderlich.

Wie bereits vorstehend angedeutet, ist es möglich, dass ein digitales Bild eines Schlechtprodukts für den Einlernprozess nicht nur eine einzige Anomalie aufweist, sondern mehrere Anomalien. In diesem Fall bietet es sich erfindungsgemäß an, ein solches digitales Bild in mehrere Bilder aufzuteilen, welche jeweils nur eine einzige Anomalie beinhalten. Die Aufteilung muss in Kenntnis der Ortsinformation erfolgen, d.h. der Information, welche Anomalie an welcher Position an der Oberfläche bzw. innerhalb des Produkts und damit- unter Berücksichtigung der Information, wie das Bild aufgenommen wurde (Blickwinkel, Art der Aufnahme wie Fotografie, Durchstrahlungsscan etc.) - an welcher Position innerhalb des Bildes welche Anomalie vorliegt.

Mit den so erzeugten digitalen Bildern von Schlechtprodukten, die jeweils eine Anomalie enthalten, kann dann der vorstehend beschriebene Einlernprozess in analoger Weise durchgeführt werden, so dass im Folgenden nur noch auf die maßgeblichen Unterschiede eingegangen wird.

Anstelle der ausschließlichen Verwendung von Schlechtprodukten können auch Produkte verwendet werden, die überwiegend Schlechtprodukte, d.h. in geringerem Maß auch Gutprodukte umfassen. Solche Produkte werden im Folgenden als Schlecht-Prozessprodukte bezeichnet. Wie unten erläutert, können sowohl von Gut-Prozessprodukten umfasste Gutprodukte bzw. hierauf zurückgehende Extremwerte als auch von Schlecht-Prozessprodukten umfasste Gutprodukte bzw. hierauf zurückgehende Extremwerte mit geeigneten Verfahren aus den betreffenden Stichproben aussortiert werden.

Da die digitalen Bilder im Fall von Schlechtprodukten maximale oder minimale Werte von Eigenschaften von Regionen aufweisen, die durch die Anomalien verursacht sind, beschreiben die zugehörigen Wahrscheinlichkeitsdichtefunktionen nur die Anomalien und nicht die Gutbereiche des Produkts. Diese Information kann somit nicht verwendet werden, um eine Fehlauswurfsrate vorzugeben bzw. zu erreichen. Vielmehr kann diese Information stattdessen verwendet werden, um eine Aussage darüber zu erhalten, wann bzw. unter welchen Voraussetzungen Schlechtprodukte fälschlicherweise nicht mehr als solche erkannt werden.

Wird der Einlernprozess mit Schlechtprodukten bzw. Prozess-Schlechtprodukten durchgeführt, so wird jeweils eine Rate vorgegeben, mit der in einem zu untersuchenden Bild richtigerweise eine Maximal- bzw. Minimal-Anomalie detektiert werden soll, oder jeweils eine Rate, mit der in zu untersuchenden Bildern fälschlicherweise keine Maximal- bzw. Minimal-Anomalie erkannt werden soll.

Das Bestimmen des Maximal-Schwellwertes unter Verwendung der parametrierten Wahrscheinlichkeitsdichtefunktion oder einer dieser entsprechenden Verteilungsfunktion erfolgt dann so, dass die Wahrscheinlichkeit für das Auftreten eines maximalen Wertes, der kleiner oder gleich dem Maximal-Schwellwert ist, der vorgegebenen Rate entspricht, mit der in einem zu untersuchenden Bild fälschlicherweise keine Maximal-Anomalie detektiert wird, oder dass die Wahrscheinlichkeit für das Auftreten eines maximalen Wertes, der größer oder gleich dem Maximal-Schwellwert ist, der vorgegebenen Rate entspricht, mit der in einem zu untersuchenden Bild richtigerweise eine Maximal- bzw. Minimal-Anomalie erkannt wird.

Soll ein Minimal-Schwellwert unter Verwendung der parametrierten Wahrscheinlichkeitsdichtefunktion oder einer dieser entsprechenden Verteilungsfunktion bestimmt werden, erfolgt dies in analoger Weise so, dass die Wahrscheinlichkeit für das Auftreten eines minimalen Wertes, der größer oder gleich dem Minimal-Schwellwert ist, der betreffenden vorgegebenen Rate entspricht, mit der in einem zu untersuchenden Bild fälschlicherweise keine Minimal-Anomalie detektiert wird, oder dass die Wahrscheinlichkeit für das Auftreten eines minimalen Wertes, der kleiner oder gleich dem Minimal-Schwellwert ist, der betreffenden vorgegebenen -Rate entspricht, mit der in einem zu untersuchenden Bild richtigerweise eine Minimal-Anomalie erkannt wird.

Nach einer Ausführungsform der Erfindung können die Schätzwerte für die Parameter der vorgegebenen Wahrscheinlichkeitsdichtefunktion mittels eines statistischen Schätzers (auch als Schätzfunktion bezeichnet) bestimmt werden, beispielsweise mittels der Maximum-Likelihood-Methode oder der Momenten-Methode. Es ist ebenfalls möglich, die Stichprobenelemente zu "binnen", d.h. jeweils benachbarten Intervallen mit einer vorgegebenen Breite zuzuordnen und damit eine empirische Häufigkeitsverteilung zu erstellen. An diese Häufigkeitsverteilung kann dann die gewählte, zu parametrierende Wahrscheinlichkeitsdichtefunktion gefittet werden. Hierzu kann beispielsweise die Least-Squares-Methode verwendet werden. Üblicherweise wird man hierfür jedoch eine vorteilhaftere statistische Schätzfunktion verwenden, beispielsweise die Maximum-Likelihood-Methode oder die Momenten-Methode.

Als Ergebnis erhält man Werte für die Parameter der vorgegebenen Wahrscheinlichkeitsdichtefunktion. Es an dieser Stelle erwähnt, dass es in bestimmten Fällen auch möglich ist, einen oder mehrere Werte für bestimmte Parameter der Wahrscheinlichkeitsdichtefunktion vorzugeben und nur die verbleibenden "freien" Parameter in der vorstehend beschriebenen Weise zu bestimmen.

Nach einer weiteren Ausführungsform können die Regionen mittels eines Basis-Schwellwertes festgelegt werden, wobei benachbarte Pixel, deren Pixelwert größer (oder gleich) dem Basis-Schwellwert ist, eine erste Gruppe von Regionen bilden, und benachbarte Pixel, deren Pixelwert kleiner als derBasis-Schwellwert ist, eine zweite Gruppe von Regionen. Die erste und zweite Gruppe von Regionen können auch zu einer einzigen Gruppe zusammengefasst werden. Eine weitere Möglichkeit zur Festlegung der Regionen besteht in der Verwendung einer vordefinierten (geometrischen) Maske. Beispielsweise kann eine matrixartige Maske verwendet werden, welche ein z.B. quadratisches Raster (d.h. ein schachbrettartiges Raster) über das digitale Bild legt, wobei alle Pixel innerhalb eines Quadrates eine Region bilden. Selbstverständlich kann die Maske auch andere Unterteilungen bewirken, wobei nicht das gesamte Bild in Regionen aufgeteilt werden muss.

Den Regionen wird erfindungsgemäß eine Eigenschaft zugeordnet, die sich mit einem Wert beschreiben lässt. Hierbei kann es sich insbesondere um geometrische Eigenschaften handeln, wie die Fläche, den Umfang oder den Durchmesser der Regionen (wenn diese zumindest annähernd kreisförmig sind) oder um Pixelwert-Eigenschaften, die durch einen Wert beschrieben werden, der sich aus den Pixelwerten der betreffenden Region ergibt, wie z.B. der maximale oder minimale Wert einer Region, der Durchschnittswert oder die Varianz der Pixelwerte.

Es können auch mehrere Eigenschaften kombiniert werden, die sich dann durch einen kombinierten Wert beschreiben lassen. Beispielsweise können der Mittelwert und die Standardabweichung addiert werden, wobei diese Information eine Art Konfidenzintervall für die Pixelwerte darstellt. Es kann auch die Differenz der Maxima und Minima als kombinierter Wert verwendet werden, welche die Helligkeitsdifferenz der Region beschreibt. Da dieses Maß gegen Ausreißer empfindlich ist, können stattdessen Quantile verwendet werden, beispielsweise die Quantile bei 10 % und 90 % als Alternative zu Maxima und Minima. Weiterhin kann der Quotient aus Umfang und Fläche verwendet werden, um darauf zu schließen, wie gut kreisförmig die Region ist bzw. wie weit sie von einer Kreisförmigkeit abweicht. Es können aber auch geometrische und Pixelwert-Eigenschaften kombiniert werden.

Wie bereits vorstehend erwähnt, kann die Anzahl von Elementen der Stichprobe, d.h. die Anzahl von Extremwerten (maximale oder minimale Grauwerte), auch nicht von vornherein fest vorgegeben sein. Insbesondere kann die Anzahl von digitalen Bildern von Gutprodukten bzw. Gut-Prozessprodukten oder Schlechtprodukten bzw. Schlecht-Prozessprodukten unter Verwendung mindestens eines Abbruchkriteriums im Verlauf des Einlernprozesses bestimmt werden. Hierzu kann die aktuelle Anzahl von digitalen Bildern so lange erhöht werden, bis das mindestens eine Abbruchkriterium erfüllt ist. Dabei wird das vorbeschriebene Verfahren, mit dem der betreffende Schwellwert bestimmt wird, in jedem Schritt, d. h. nach jeder Erhöhung der Anzahl von digitalen Bildern, durchgeführt.

Es ist dabei selbstverständlich möglich, in einem ersten Schritt zunächst eine Mindestanzahl von digitalen Bildern auszuwerten, um eine Mindestanzahl von Elementen jeder Stichprobe von maximalen bzw. minimalen Grauwerten zu erhalten. Diese Mindestanzahl wird so groß gewählt, dass die verwendete Schätzfunktion bereits mit einiger Wahrscheinlichkeit einigermaßen sinnvolle Schätzwerte für die Parameter der betreffenden Wahrscheinlichkeitsdichtefunktion erzeugen kann.

Nach einer Ausführungsform der Erfindung kann das mindestens eine Abbruchkriterium durch ein Konfidenzintervall für wenigstens einen Parameter der betreffenden Wahrscheinlichkeitsdichtefunktion gebildet oder daraus abgeleitet sein. Zur Bestimmung des Konfidenzintervalls kann ein Konfidenzniveau, beispielsweise 95 % oder 99 %, vorgegeben werden. Weist das Konfidenzintervall zu dem vorgegebenen Konfidenzniveau eine ausreichend geringe (vorgegebene) Gesamtbreite auf oder einen ausreichend geringen (vorgegebenen) Abstand vom Schätzwert zur oberen bzw. unteren Grenze des Konfidenzintervalls, so kann das Abbruchkriterium als erfüllt angesehen werden. Diese Variante wird man jedoch nur dann wählen, wenn bereits eine Erfahrung vorliegt, wie sich eine entsprechende Unsicherheit des oder der Parameter der betreffenden Wahrscheinlichkeitsdichtefunktion auf den zu bestimmenden Schwellwert auswirkt.

Nach einer anderen Ausführungsform ist das mindestens eine Abbruchkriterium gebildet durch ein Schwellwert-Konfidenzintervall für den Minimal-Schwellwert oder den Maximal-Schwellwert, wobei das Schwellwert-Konfidenzintervall bestimmt wird durch das Bestimmen eines Konfidenzintervalls für jeden Parameter und das Bestimmen der Auswirkung dieser Konfidenzintervalle auf das Schwellwert-Konfidenzintervall, insbesondere unter Verwendung der Methode der Fehlerfortpflanzung, insbesondere der Methode der Gauß'schen Fehlerfortpflanzung. Hierdurch ergibt sich der Vorteil, dass die Unsicherheit für den Schwellwert unmittelbar erkennbar wird. Für die Fehlerfortpflanzung wird die linke und rechte Grenze des Konfidenzintervalls für den betreffenden Parameter bestimmt und hieraus die Differenz zwischen dem Schätzwert und der betreffenden Grenze. Diese Differenzen können dann für die Fehlerfortpflanzung verwendet werden.

Es ist schließlich ebenfalls möglich, als das mindestens eine Abbruchkriterium ein Schwellwert-Konfidenzintervall für den Minimal-Schwellwert oder Maximal-Schwellwert zu verwenden, wobei das Schwellwert-Konfidenzintervall mittels eines statistischen Verfahrens bestimmt wird, insbesondere unter Verwendung der Bootstrapping-Methode. Dabei werden aus der jeweils vorhandenen Stichprobe von maximalen bzw. minimalen Grauwerten eine Vielzahl von weiteren Stichproben generiert, die üblicherweise denselben Umfang aufweisen und die aus der vorhandenen Stichprobe jeweils durch erneutes "Ziehen mit Zurücklegen" (bei gleicher Auswahlwahrscheinlichkeit) erzeugt werden. Mit diesen so generierten Stichproben wird jeweils erneut unter Verwendung der betreffenden Schätzfunktion der Schwellwert berechnet. Dies führt zu einer Verteilung von Schwellwerten in einem Intervall, wobei diese Verteilung zur Bestimmung des Konfidenzintervalls verwendet wird.

In gleicher Weise kann ein Konfidenzintervall für die betreffende(n) vorgegebene(n) Rate(n) vorgegeben werden.

Ganz allgemein gilt für das Vorgeben von Konfidenzintervallen, falls sowohl Minimal- als auch Maximal-Schwellwerte in ein und demselben Lernprozess bestimmt werden sollen, dass ein Abbruch erst dann erfolgt, wenn beide Abbruchkriterien erfüllt sind.

Nach einer weiteren Ausführungsform wird unter Verwendung der betreffenden parametrierten Wahrscheinlichkeitsdichtefunktion und der betreffenden Parameter für jeden detektierten Maximal-Stichprobenwert oder Minimal-Stichprobenwert die Wahrscheinlichkeit bestimmt, mit welcher Werte auftreten, die kleiner oder gleich dem betreffenden detektierten Maximal-Stichprobenwert oder Minimal-Stichprobenwert sind, und die Wahrscheinlichkeit, mit welcher Werte auftreten, die größer oder gleich dem betreffenden detektierten Maximal-Stichprobenwert oder Minimal-Stichprobenwert sind. Die Parameter für die Wahrscheinlichkeitsdichtefunktion werden unter Verwendung dieser Ergebnisse neu bestimmt, wenn für wenigstens einen der detektierten Maximal-Stichprobenwerte oder Minimal-Stichprobenwerte eine der beiden jeweils so bestimmten Wahrscheinlichkeiten kleiner ist als eine vorgegebene Ausreißerschranke, wobei bei der Neubestimmung diese Maximal-Stichprobenwerte oder Minimal-Stichprobenwerte unberücksichtigt bleiben.

Hierdurch wird eine Ausreißererkennung realisiert, bei der solche Elemente der Stichprobe (d.h. solche Extremwerte) bei der Bestimmung der Wahrscheinlichkeitsdichtefunktion außer Betracht bleiben, deren Auftrittswahrscheinlichkeit äußerst gering ist. Dies ermöglicht es insbesondere, das erfindungsgemäße Verfahren auch dann einzusetzen, wenn nicht sichergestellt ist, dass der Einlernprozess ausschließlich mit Gutprodukten oder ausschließlich mit Schlechtprodukten durchgeführt wird. Beispielsweise kann beim Anfahren einer Produktionslinie (oder auch während einer laufenden Produktion) eine Lernphase durchgeführt werden, in welcher die jeweils produzierten Produkte bzw. der Anlage zugeführten Produkte zur Bestimmung (oder Neubestimmung) des jeweiligen Schwellwertes verwendet werden. Befindet sich unter diesen Produkten ein Schlechtprodukt (d.h. handelt es sich um Gut-Prozessprodukte), so kann der betreffende maximale bzw. minimale Grauwert, der dann ein Schlechtprodukt charakterisiert, ausgeschlossen werden.

Diese Vorgehensweise kann auch rekursiv durchgeführt werden, da sich beim Ausschluss von Stichproben eine neue, veränderte parametrierte Wahrscheinlichkeitsdichtefunktion ergibt, die dann auch in Bezug auf die noch verwendeten Stichprobenwerte zu geänderten Auftrittswahrscheinlichkeiten führt. Die Anzahl der maximal durchgeführten Rekursionen kann dabei selbstverständlich begrenzt werden. Ebenso kann diese Ausreißererkennung erst dann eingesetzt werden, wenn die betreffende Stichprobe eine Mindestanzahl von Werten umfasst.

Es sei an dieser Stelle erwähnt, dass die Auftrittswahrscheinlichkeiten selbstverständlich wiederum mittels der zugehörigen Verteilungsfunktion ermittelt werden können, ohne dass jeweils ein neuer Berechnungsvorgang für die Integration der Wahrscheinlichkeitsdichtefunktion erforderlich ist.

Nach einer weiteren Ausführungsform der Erfindung kann ein statistischer Test durchgeführt werden, welcher eine Aussage darüber liefert, ob die jeweils vorgegebene Wahrscheinlichkeitsdichtefunktion unter Verwendung der hierfür ermittelten Schätzwerte für die Parameter die empirische Verteilung in Form der betreffenden detektierten maximalen und/oder minimalen Grauwerte hinreichend genau beschreibt. Als Beispiele für mögliche statistische Tests seien der Chi-Quadrat-Anpassungstest, der Kolmogorow-Smirnow-Anpassungstest, der Anderson-Darling-Anpassungstest, der Jarque-Bera-Anpassungstest oder der Lilliefors-Anpassungstest genannt.

Hierdurch kann gewährleistet werden, dass eine ausreichende Anzahl von Stichprobenelementen zur Schätzung der Parameter der Wahrscheinlichkeitsdichtefunktion verwendet werden, welche zudem die Wahrscheinlichkeitsdichtefunktion hinreichend genau charakterisieren bzw. ob der gewählte Typ der Wahrscheinlichkeitsdichtefunktion geeignet ist, die empirische Verteilungsdichte der betreffenden Stichprobe zu charakterisieren.

Die Schätzung der Parameter kann, vorzugsweise nach dem Detektieren einer vorgegebenen Mindestanzahl von Maximal-Stichprobenwerten oder Minimal-Stichprobenwerten, für eine Mehrzahl von vorgegebenen unterschiedlichen Wahrscheinlichkeitsdichtefunktionen durchgeführt werden, wobei für jede der so parametrierten Wahrscheinlichkeitsdichtefunktionen der statistische Test durchgeführt wird und wobei für das weitere Verfahren diejenige Wahrscheinlichkeitsdichtefunktion als vorgegebene Wahrscheinlichkeitsdichtefunktion verwendet wird, für welche der statistische Test das zutreffendste Ergebnis liefert. Hierdurch kann im Einlernprozess aus einer vorgegebenen Anzahl von Typen von Wahrscheinlichkeitsdichtefunktionen derjenige Typ ausgewählt werden, der sich, abhängig vom Charakter bzw. der Beschaffenheit (insbesondere der Geometrie und dem Material der zu untersuchenden Produkte und der auftretenden Anomalien), als am geeignetsten erweist.

Nach einer Ausführungsform der Erfindung kann aus den Grenzen des Konfidenzintervalls für den Maximal-Schwellwert und/oder den Minimal-Schwellwert ein Konfidenzintervall und/oder mindestens eine Fehlergrenze für die betreffende vorgegebene Rate bestimmt werden. Dies kann selbstverständlich wiederum durch die Integration der Wahrscheinlichkeitsdichtefunktion oder das Verwenden der zugehörigen Verteilungsfunktion erfolgen.

Die so bestimmten Werte können dann nach Beendigung des Einlernprozesses, d.h. bei der Durchführung des Verfahrens mit dem entsprechend bestimmten Schwellwert, zur Überwachung und/oder Steuerung von Vorrichtungen oder einer gesamten Produktionslinie ausgegeben werden, die zur Herstellung, Bearbeitung oder Prüfung der Produkte dienen. Beispielsweise kann die aktuelle Rate überwacht und/oder auf einem Display angezeigt werden, beispielsweise auch abhängig von der Produktionszeit. Maßgeblich ist dabei insbesondere die obere Fehlergrenze im Fall der vorgegebenen Raten, mit der in einem zu untersuchenden Bild fälschlicherweise eine Maximal- oder Minimal-Anomalie detektiert werden soll, bzw. die untere Fehlergrenze im Fall der vorgegebenen Raten, mit der in einem zu untersuchenden Bild richtigerweise eine Minimal- bzw. Maximal-Anomalie detektiert werden soll.

Es ist ebenfalls möglich, den Maximal-Schwellwert und/oder den Minimal-Schwellwert zur Überwachung und/oder Steuerung von Vorrichtungen oder einer gesamten Produktionslinie auszugeben, die zur Herstellung, Bearbeitung oder Prüfung der gescannten Produkte dienen. Insbesondere könnte die Leistung einer Strahlungsquelle einer Inspektionsvorrichtung, mit welcher die digitalen Bilder erzeugt werden (beispielsweise eine Röntgenstrahlungsquelle), so weit reduziert werden, bis sich immer noch die gewünschte (niedrige) vorgegebene Rate erzielen lässt.

Nach einer weiteren Ausführungsform der Erfindung kann auf der Basis des ermittelten Maximal-Schwellwertes ein sekundärer Maximal-Schwellwert ermittelt werden, wobei der sekundäre Maximal-Schwellwert innerhalb der Grenzen eines für den Maximal-Schwellwert bestimmten Konfidenzintervalls oder gleich einer Grenze dieses Konfidenzintervalls gewählt wird. In gleicher Weise kann auf der Basis des ermittelten Minimal-Schwellwertes ein sekundärer Minimal-Schwellwert ermittelt wird, wobei der sekundäre Minimal-Schwellwert innerhalb der Grenzen eines für den Minimal-Schwellwert bestimmten Konfidenzintervalls oder gleich einer Grenze dieses Konfidenzintervalls gewählt wird. Hierdurch kann die Detektion von Maximal- bzw. Minimal-Anomalien entweder in Richtung einer verbesserten (verringerten) Fehlauswurfrate oder in Richtung einer verbesserten Sensitivität der Erkennung von Anomalien optimiert werden. Als in der Praxis am relevantesten kann die Verringerung der Fehlauswurfrate durch das Setzen des sekundären Maximal-Schwellwertes auf die obere Grenze des Konfidenzintervalls für den Maximal-Schwellwert bzw. das Setzen des sekundären Minimal-Schwellwertes auf die untere Grenze des Konfidenzintervalls für den Minimal-Schwellwert angesehen werden.

Die Vorrichtung nach der Erfindung zur Durchführung des vorbeschriebenen erfindungsgemäßen Verfahrens umfasst eine Datenverarbeitungseinrichtung, welche dazu ausgebildet ist, digitale Bilddaten zu erhalten, welche die auf Anomalien hin zu untersuchenden digitalen Bilder von Produkten repräsentieren. Bei der gesamten Vorrichtung kann es sich beispielsweise um eine Vorrichtung zur Erzeugung der digitalen Bilder handeln, beispielsweise um eine Inspektionsvorrichtung, die als Röntgeninspektionsvorrichtung ausgebildet sein kann, bei der auch eine Information über das Innere eines Produkts in Form eines digitalen Bildes erzeugt wird, oder als Inspektionsvorrichtung mit einer oder mehreren Kameras, mit denen ein 2D- oder 3D-Bild eines Produkts erzeugt wird.

Eine für eine erfindungsgemäße Vorrichtung geeignete Datenverarbeitungseinrichtung kann in üblicher Weise einen Prozessor mit geeigneten Eingabe- und Ausgabeschnittstellen aufweisen. Der Prozessor kann beispielsweise als spezieller Prozessor für die industrielle Bildverarbeitung ausgebildet sein. Selbstverständlich kann der Prozessor auch durch eine Kombination eines üblichen Prozessors mit einem speziellen Bildverarbeitungsprozessor realisiert sein. Die gesamte Datenverarbeitungseinrichtung kann auch als eigenständige CPU-Einheit mit entsprechenden Schnittstellen realisiert sein, beispielsweise auch als Slot-CPU.

Weitere Ausführungsformen der Erfindung ergeben sich aus den abhängigen Ansprüchen.

Die Erfindung wird nachstehend anhand von in der Zeichnung dargestellten Ausführungsbeispielen näher erläutert. In der Zeichnung zeigen:
- Fig. 1: eine schematische Darstellung einer Röntgeninspektionsvorrichtung mit einer Vorrichtung zur Durchführung des Verfahrens nach der Erfindung;
- Fig. 2: ein Diagramm, das die empirische Häufigkeitsverteilung einer Stichprobe von maximalen Werten einer Eigenschaft von zuvor bestimmten Regionen in digitalen Bildern von Gutprodukten zeigt sowie eine an diese gefittete Wahrscheinlichkeitsdichtefunktion;
- Fig. 3: ein Diagramm, das jeweils eine Wahrscheinlichkeitsdichtefunktion für minimale und maximale Werte einer Eigenschaft zeigt, die unter Verwendung von digitalen Bildern von Gutprodukten (oder Gut-Prozessprodukten) bestimmt wurden;
- Fig. 4: ein Diagramm, das jeweils eine Wahrscheinlichkeitsdichtefunktion für minimale und maximale Werte einer Eigenschaft zeigt, die unter Verwendung von digitalen Bildern von Schlechtprodukten (oder Schlecht-Prozessprodukten) bestimmt wurden;
- Fig. 5: ein vereinfachtes Ablaufdiagramm zur Erläuterung des Verfahrens zur Bestimmung des Schwellwertes;
- Fig. 6: ein Diagramm, welches die Auswurfrate in Abhängigkeit von der Zeit darstellt, wie sie im Betrieb einer Röntgeninspektionsvorrichtung nach Fig. 1 auftreten kann, wobei eine vorgegebene obere Konfidenzgrenze zumindest bei der Betrachtung eines gleitenden Mittelwertes eingehalten wird;
- Fig. 7: ein Diagramm ähnlich Fig. 6, wobei die obere Konfidenzgrenze überschritten wird;
- Fig. 8: ein Diagramm ähnlich den Fig. 6 und 7, wobei die obere Konfidenzgrenze eingehalten und eine untere Konfidenzgrenze noch unterschritten wird;
- Fig. 9: ein Diagramm, das eine erste Wahrscheinlichkeitsdichtefunktion (Kurve (a)) für maximale Werte einer Eigenschaft zeigt, die unter Verwendung von digitalen Bildern von Gutprodukten (oder Gut-Prozessprodukten) bestimmt wurde, und eine zweite Wahrscheinlichkeitsdichtefunktion (Kurve (b)) für maximale Werte einer Eigenschaft, die unter Verwendung von digitalen Bildern von Schlechtprodukten (oder Schlecht-Prozessprodukten) bestimmt wurde, wobei der aus der Kurve (a) ermittelte Schwellwert Xₛₒ größer ist als der aus der Kurve (b) ermittelte Schwellwert Yₛₒ, und
- Fig. 10: ein Diagramm analog Fig. 9, wobei jedoch der aus der Kurve (a) ermittelte Schwellwert Xₛₒ kleiner ist als der aus der Kurve (b) ermittelte Schwellwert Yₛₒ.

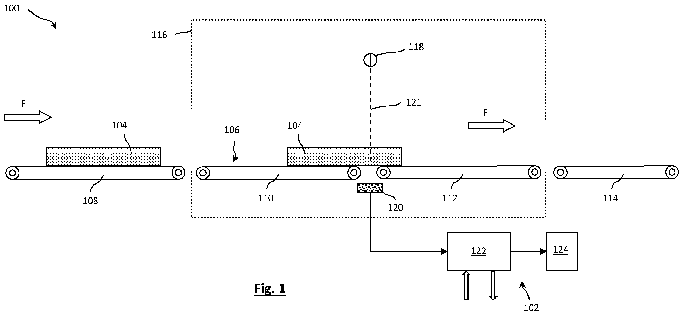

In Fig. 1 ist schematisch eine Röntgeninspektionsvorrichtung 100 mit einer Vorrichtung 102 zur Detektion von Anomalien in digitalen Bildern dargestellt, welche zur Durchführung des nachstehend beschriebenen Verfahrens ausgebildet ist. Die Röntgeninspektionsvorrichtung 100 ist dabei lediglich ein mögliches Beispiel, wie digitale Bilder, die Anomalien enthalten können, generiert werden können. Es ist möglich, das erfindungsgemäße Verfahren auf beliebige digitale Bilder anzuwenden, die auf das Vorhandensein von Anomalien untersucht werden sollen.

Wie bereits vorstehend ausgeführt, werden die digitalen Bilder üblicherweise Produkte darstellen, welche ihrerseits die zu detektierenden Anomalien aufweisen. Im Fall der in Fig. 1 dargestellten Röntgeninspektionsvorrichtung werden als Beispiel Produkte 104 in Form von Stückgütern untersucht. Es ist jedoch ebenso möglich, digitale Bilder von beliebigen anderen Produkten zu erzeugen, beispielsweise von Schüttprodukten. In diesem Fall bietet sich an, dass digitale Bilder erzeugt werden, die jeweils einen Abschnitt des Schüttprodukts darstellen.

Bei der in Fig. 1 dargestellten Röntgeninspektionsvorrichtung 100 werden die zu untersuchenden Produkte 104 mittels einer Fördereinrichtung 106 entlang eines vorgegebenen Förderwegs (angedeutet durch den Pfeil F) transportiert. Die Fördereinrichtung 106 weist dabei mehrere Transportbänder 108, 110, 112, 114 auf. Das Transportband 108 dient zum Zufördern der Produkte 104 und das Transportband 114 zum Abfördern der Produkte. Die Inspektionsvorrichtung 100 weist ein Abschirmgehäuse 116 auf, in welchem die Transportbänder 110 und 112 angeordnet sind, sowie eine Röntgenstrahlungsquelle 118 und einen Röntgenstrahlungsdetektor 120. Die Röntgenstrahlungsquelle 118 erzeugt einen Röntgenstrahl 121, der senkrecht zur Zeichenebene eine fächerartige Gestalt besitzt und in Förderrichtung eine geringe Breite aufweist. Der Röntgenstrahl 121 tritt durch einen Spalt bzw. Freiraum zwischen den einander zugewandten Stirnseiten der Transportbänder 110 und 112 durch und trifft dann auf den Röntgenstrahlungsdetektor 120, der bei der in Fig. 1 dargestellten Ausführungsform der Röntgeninspektionsvorrichtung 100 unterhalb der Transportbänder 110, 112 angeordnet ist. Der Röntgenstrahlungsdetektor 120 weist eine Breite auf, welche in der Richtung senkrecht zur Zeichenebene der maximalen Breite der zu untersuchenden Produkte entspricht. Üblicherweise wird die Breite des Röntgenstrahlungsdetektors in etwa so groß gewählt wie die Breite der Transportbänder 110, 112. Der Röntgenstrahlungsdetektor 120 kann als Zeilendetektor ausgebildet sein, welcher in der Richtung senkrecht zur Zeichenebene eine oder mehrere Detektorzeilen aufweist, wobei jede Detektorzeile eine vorgegebene Anzahl von Pixeln aufweist.

Die Vorrichtung 102 zur Detektion von Anomalien weist eine Bildverarbeitungseinheit 122 auf, welcher das Signal des Röntgenstrahlungsdetektors 120 zugeführt ist. Die Bildverarbeitungseinheit 122 kann als übliche Computereinheit mit einem oder mehreren Prozessoren, einem Arbeitsspeicher und gegebenenfalls einem Festplattenspeicher oder SSD-Speicher sowie geeigneten Schnittstellen für das Zuführen des Signals des Röntgenstrahlungsdetektors 120 sowie für das Zuführen bzw. Empfangen und Abführen bzw. Senden von weiteren Daten ausgebildet sein. Weiterhin kann die Vorrichtung 102 eine Anzeigeeinheit 124 aufweisen, auf welcher Informationen angezeigt werden können, die von der Bildverarbeitungseinheit 122 generiert oder dieser zugeführt wurden.

Wie in Fig. 1 schematisch dargestellt, werden die zu untersuchenden Produkte 104 durch den fächerartigen Röntgenstrahl 121 bewegt, wodurch mittels des Röntgenstrahlungsdetektors 120, welcher als Zeilendetektor ausgebildet ist, ein entsprechendes digitales Bildsignal erzeugt wird, welches der Bildverarbeitungseinheit 122 zugeführt ist. Die Bildverarbeitungseinheit 122 kann so ausgebildet sein, dass zunächst aus dem Bildsignal ein digitales Bild erzeugt wird, welches, im Fall eines Stückguts, das komplette Produkt 104 beinhaltet oder zumindest einen vorgegebenen Ausschnitt. Der Ausschnitt kann mit üblichen Methoden der Bildverarbeitung bzw. Mustererkennung gewählt werden. Die Bildverarbeitungseinheit 122 kann aus dem so erzeugten digitalen Bild das endgültige digitale Bild, welches mit dem nachstehend beschriebenen Verfahren auf das Vorhandensein von Anomalien untersucht werden soll, auch einer weiteren Bildverarbeitung unterziehen, beispielsweise einer digitalen Filterung, die so gewählt ist, dass zu detektierende Anomalien besser erkennbar sind, insbesondere gegenüber dem Restbild besser hervortreten. Eine derartige Bildvorverarbeitung kann auch beliebige weitere Bildverarbeitungsschritte umfassen, beispielsweise eine Rauschunterdrückung oder dergleichen. Am Ende einer derartigen (nicht zwingend erforderlichen) Bildvorverarbeitung steht das digitale Bild, welches dann auf das Vorliegen von Anomalien untersucht werden soll.

Wie eingangs ausgeführt, ist es für das Detektieren von Anomalien bekannt, einen Schwellwert für die Pixelwerte zu verwenden. Das Vorliegen einer Anomalie wird in diesem Fall detektiert, wenn ein Pixelwert oder eine Gruppe von benachbarten Pixeln mit einer vorgegebenen Mindestanzahl von Pixeln einen Schwellwert überschreitet. Werden eine oder mehrere Anomalien in einem digitalen Bild detektiert, so kann diese Information verwendet werden, um eine Aktion in Bezug auf das zugehörige Produkt auszulösen, beispielsweise das Produkt aus einem Strom von Produkten auszuleiten. Stattdessen oder zusätzlich kann das betreffende Produkt auch physisch oder virtuell, d. h. durch das Zuordnen entsprechender Daten, markiert werden.

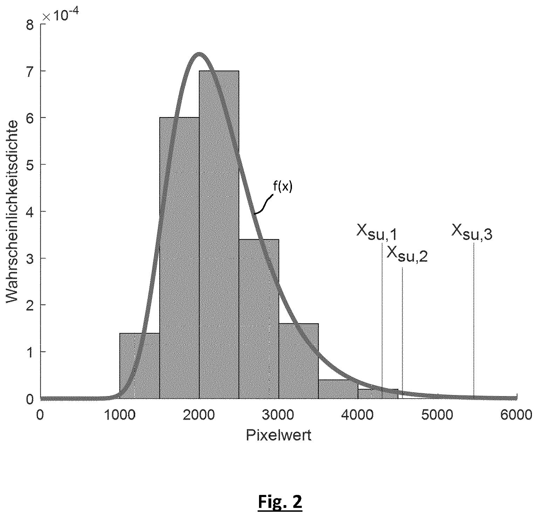

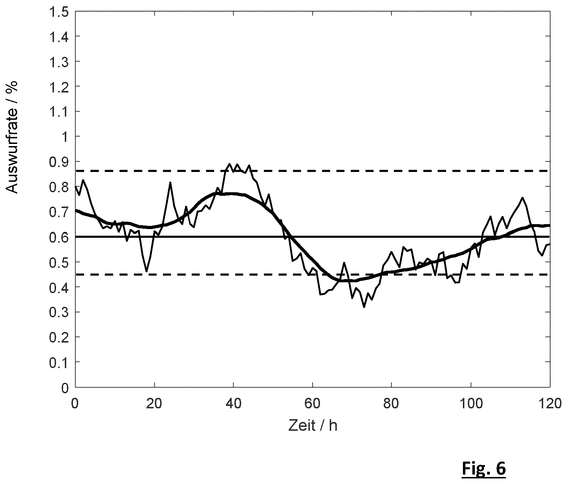

Die Anzeigeeinheit 124 kann dazu verwendet werden, gewünschte Informationen anzuzeigen, wie beispielsweise die zu untersuchenden digitalen Bilder mit gegebenenfalls darin detektierten Anomalien, den jeweils verwendeten Schwellwert, die Art einer gewählten Wahrscheinlichkeitsdichtefunktion und die zugehörigen Parameter, die Güte des Fits der Wahrscheinlichkeitsdichtefunktion an die Stichprobe, Konfidenzintervalle für die Schwellwerte, die Parameter oder die Raten (insbesondere die Fehlauswurfrate) und dergleichen. Die Ausgabe kann selbstverständlich in Form von Daten (Zahlenwerten) und/oder Grafiken erfolgen. Bei der Durchführung der Detektion im normalen Arbeitsmodus der Vorrichtung kann auch ein Diagramm gleich oder ähnlich den Fig. 6 bis 7 angezeigt werden, insbesondere der Verlauf der aktuellen Auswurfrate während des (normalen) Arbeitsbetriebs der Vorrichtung 102 (aber auch während des Einlernprozesses) über die Zeit, wobei auch die vorgegebene Rate (z.B. die Fehlauswurfrate) und das Konfidenzintervall für die vorgegebene Rate dargestellt werden. Weiterhin kann auch eine Liste mit den Stichprobenwerten und/der eine Grafik ähnlich Fig. 2 dargestellt werden. Die betreffenden Daten können natürlich auch an eine übergeordnete Einheit ausgegeben und/oder gespeichert werden.

Der Bildverarbeitungseinheit 122 können auch ein oder mehrere Start-Schwellwerte zugeführt werden, die mit dem nachstehend beschriebenen Verfahren für einen gerade zu untersuchenden Produkttyp bereits ermittelt wurden oder weitere Informationen, die für die Durchführung des nachstehend beschriebenen Verfahrens erforderlich sind, beispielsweise Informationen betreffend den zu verwendenden Typ der vorgegebenen Wahrscheinlichkeitsdichtefunktion(en) oder Informationen, in welcher Art und Weise Regionen in einem zu untersuchenden digitalen Bild definiert werden (siehe unten).

Wie vorstehend ausgeführt, beschränkt sich das nachstehend erläuterte Verfahren zur Detektion von Anomalien in digitalen Bildern nicht auf eine Prüfung, ob ein oder mehrere Pixelwerte einen vorgegebenen Maximal-Schwellwert überschreiten oder einen vorgegebenen Minimal-Schwellwert unterschreiten. Vielmehr kann das nachstehend beschriebene Verfahren zur Festlegung bzw. Bestimmung eines Maximal-Schwellwertes oder Minimal-Schwellwertes dahingehend verallgemeinert werden, dass ein Maximal-Schwellwert und/oder ein Minimal-Schwellwert für beliebige Eigenschaften von zuvor festgelegten Regionen in den zu untersuchenden digitalen Bildern bestimmt wird.

Hierzu müssen in einem zu untersuchenden digitalen Bild zunächst die Regionen definiert werden, denen jeweils der Wert einer vorgegebenen Eigenschaft zugeordnet werden kann. Das Definieren der Regionen kann beispielsweise so erfolgen, dass ein Basis-Schwellwert verwendet wird, wobei alle Pixelwerte die gleich dem Schwellwert sind oder diesen überschreiten, eine erste Gruppe von Regionen bilden und die übrigen Pixelwerte eine zweite Gruppe von Regionen. Abhängig von der Eigenschaft, die untersucht werden soll, kann es genügen, dass jeweils nur die erste oder nur die zweite Gruppe weiterverarbeitet wird. Dies ist beispielsweise dann der Fall, wenn als Eigenschaft der Regionen nur der maximale oder der minimale Pixelwert oder der durchschnittliche Pixelwert der Regionen für das Erkennen einer Anomalie ausgewertet wird.

Es ist jedoch möglich, den Regionen auch eine oder mehrere Eigenschaften zuzuordnen, die sich nicht nur durch einzelne Pixelwerte beschreiben lassen. Beispielsweise können einer Region geometrische Eigenschaften wie beispielsweise Fläche, Umfang, Durchmesser (im Fall zumindest annähernd kreisförmiger Regionen) oder die Abweichung von der Kreisform zugeordnet werden. In einem solchen Fall wird eine Anomalie dann erkannt, wenn der Wert der betreffenden Eigenschaft einen hierfür vorgegebenen Maximal-Schwellwert überschreitet bzw. einen vorgegebenen Minimal-Schwellwert unterschreitet. Auch in diesem allgemeinen Fall können die hierfür erforderlichen Maximal- bzw. Minimal-Schwellwerte mit dem nachstehend erläuterten Verfahren bestimmt werden.

Eine andere Möglichkeit für das Bestimmen der Regionen in einem zu untersuchenden digitalen Bild besteht darin, eine vorgegebene geometrische Maske zu verwenden, die über das Bild gelegt wird. Hierbei kann es sich beispielsweise um eine Maske handeln, die aus gleich großen benachbarten Quadraten einer vorgegebenen Größe besteht.

Auch hier können jeder so definierten Region eine oder mehrere Eigenschaften zugeordnet werden, beispielsweise die Varianz oder Standardabweichung der von den Regionen umfassten Pixelwerte, der betreffende Durchschnittswert oder der darin enthaltene Maximalwert oder Minimalwert.

Es lassen sich auch kombinierte Werte für jede Region bestimmen, die aus zwei oder mehreren Werten für unterschiedliche Eigenschaften ermittelt werden. Beispielsweise können ein Wert für die Varianz oder Standardabweichung der Pixelwerte und ein Durchschnittswert zu einem kombinierten Wert zusammengefasst werden, insbesondere durch eine arithmetische Operation, beispielsweise (gewichtete) Addition, was in diesem speziellen Fall eine Art Konfidenzintervall darstellt, falls die Pixelwerte in dieser Region einigermaßen normal verteilt sind. Ein weiteres Beispiel für einen kombinierten Wert bzw. die Kombination von Eigenschaften der Regionen ist die Verwendung einer Differenz zwischen dem jeweils darin enthaltenen maximalen und minimalen Pixelwert. Um stabiler gegen Ausreißer zu sein, können auch Quantile verwendet werden, beispielsweise 90 % und 10 % Quantile statt des maximalen und minimalen Werts.

Im Folgenden wird beschrieben, wie ein entsprechender Maximal-Schwellwert bzw. Minimal-Schwellwert mit einer geringen Anzahl von digitalen Bildern bestimmt werden kann. Wie vorstehend erwähnt, kann ein solcher Einlernprozess sowohl mit Gutprodukten bzw. Gut-Prozessprodukten als auch mit Schlechtprodukten bzw. Schlecht-Prozessprodukten durchgeführt werden. Der Einlernprozess kann beispielsweise bei der Inbetriebnahme einer Anlage zur Herstellung oder Bearbeitung von Produkten, welche eine derartige Inspektionsvorrichtung umfasst, ausgeführt werden. Dabei wird es im Allgemeinen erforderlich sein, die Schwellwerte für jeden Produkttyp zu bestimmen.

Selbstverständlich können die Schwellwerte für bestimmte Produkttypen gespeichert werden, so dass der Einlernprozess nicht jedes Mal neu durchgeführt werden muss, wenn ein Wechsel des Typs der zu untersuchenden Produkte vorgenommen wird.

Es ist weiterhin möglich, den Einlernprozess während des laufenden Betriebs einer Anlage durchzuführen, zumindest dann, wenn davon ausgegangen werden kann, dass die Anlage Gut-Prozessprodukte erzeugt, d.h. Produkte, die überwiegend Gutprodukte darstellen (welche keine Anomalie beinhalten). Denn in diesem Fall können, wie nachstehend erläutert, die in den Gut-Prozessprodukten enthaltenen Schlechtprodukte als Ausreißer beim Erstellen der erforderlichen Stichprobe aussortiert werden.

Ein wesentliches Merkmal des nachstehend beschriebenen erfindungsgemäßen Verfahrens zur Bestimmung der Schwellwerte besteht darin, dass im Fall des Verwendens von Gutprodukten eine Rate vorgegeben wird, mit der in einem zu untersuchenden Bild fälschlicherweise eine Maximal-Anomalie detektiert werden soll (im Folgenden auch als Falsch-Positiv-Rate bezeichnet) oder mit der in einem zu untersuchenden Bild richtigerweise keine Maximal-Anomalie erkannt wird (im Folgenden auch als Richtig-Negativ-Rate bezeichnet) und/oder dass im Fall des Verwendens von Schlechtprodukten eine Rate vorgegeben wird, mit der in einem zu untersuchenden Bild richtigerweise eine Maximal-Anomalie detektiert wird (im Folgenden auch als Richtig-Positiv-Rate bezeichnet) oder mit der in einem zu untersuchenden Bild fälschlicherweise keine Maximal-Anomalie erkannt wird (im Folgenden auch als Falsch-Negativ-Rate bezeichnet). Es muss also nicht mehr in einem ersten Schritt ein Schwellwert bestimmt und in einem zweiten Schritt überprüft werden, ob sich bei einer Verwendung des betreffenden Schwellwertes eine entsprechende akzeptable Rate ergibt.

Dabei gewährleistet das erfindungsgemäße Verfahren, dass ein Schwellwert mit einer relativ geringen Anzahl von digitalen Bildern ermittelt werden kann.

Die erforderliche Anzahl von digitalen Bildern, d.h. die Anzahl von Gutprodukten oder Gut-Prozessprodukten kann von vornherein festgelegt werden, wobei eine derartige Anzahl jedoch dann so hoch gewählt werden muss, dass ein Schwellwert mit der gewünschten Zuverlässigkeit bestimmt wird. Es ist jedoch auch möglich, die erforderliche Anzahl der digitalen Bilder im Verlauf des Einlernprozesses festzulegen (unabhängig davon, ob die Bilder während des Einlernprozesses erzeugt werden oder bereits vor dem Start des Einlernprozesses zur Verfügung stehen). Dabei bietet es sich an, zunächst mit einer Mindestanzahl von digitalen Bildern zu starten und diese Mindestanzahl schrittweise um eine oder mehrere digitale Bilder so lange zu erhöhen, bis der jeweils bestimmte Schwellwert ausreichend zuverlässig ist, d.h. die vorgegebene Rate ausreichend zuverlässig eingehalten wird. Dies kann durch das Bestimmen eines Konfidenzintervalls überprüft werden.

In einem nächsten Schritt werden, wie auch bei der Detektion von Anomalien in einem normalen Betriebsmodus (d.h. außerhalb des Einlernprozesses), für jedes der digitalen Bilder die Regionen festgelegt und für jede Region der Wert mindestens einer den Regionen jeweils zugeordneten Eigenschaft bestimmt. Für jedes digitale Bild wird dann der jeweils maximale Wert und/oder der minimale Wert der Eigenschaft oder der betreffenden Eigenschaften bzw. der kombinierte Wert für mehrere Eigenschaften ermittelt und einer entsprechenden Stichprobe zugeordnet. Dies kann beispielsweise dadurch erfolgen, dass alle minimalen Werte in einer Minimalwert-Liste und alle maximalen Werte in einer Maximalwert-Liste gespeichert werden. Dabei sei erwähnt, dass selbstverständlich nicht beide Alternativen des Verfahrens gleichzeitig verwendet sein müssen. Sollen im normalen Arbeitsbetrieb nur Maximal-Anomalien detektiert werden, d.h. Anomalien, die als solche erkannt werden, wenn ein Maximal-Schwellwert überschritten wird, so muss selbstverständlich nur ein Maximal-Schwellwert bestimmt werden. Analoges gilt für den Fall, dass nur Minimal-Anomalien detektiert werden sollen.

Wurde eine ausreichende Anzahl von Stichprobenelementen (maximalen bzw. minimalen Werten für die wenigstens eine Eigenschaft bzw. kombinierte Eigenschaft) bestimmt, so kann in einem weiteren Schritt unter Verwendung eines statistischen Schätzverfahrens eine für die Maximalwert-Liste bzw. Minimalwert-Liste jeweils vorgegebene Wahrscheinlichkeitsdichtefunktion parametriert werden. Dies entspricht dem Fitten der Wahrscheinlichkeitsdichtefunktion an die empirische Häufigkeitsverteilung der betreffenden Stichprobe.

Hierzu kann die Stichprobe gebinnt werden, d.h. die Stichprobenelemente werden jeweils gleich breiten, benachbarten Intervallen des zugehörigen Wertebereichs zugeordnet. An diese empirische (relative) Häufigkeitsverteilung kann dann die betreffende vorgegebene Wahrscheinlichkeitsdichtefunktion gefittet werden, beispielsweise durch Verwenden der Least-Squares-Methode. Üblicherweise wird man hierfür jedoch eine vorteilhaftere statistische Schätzfunktion verwenden, beispielsweise die Maximum-Likelihood-Methode oder die Momenten-Methode.

Als Wahrscheinlichkeitsdichtefunktion, die für die Durchführung des Verfahrens vorgegeben werden muss, sollte ein solcher Typ gewählt werden, von dem anzunehmen ist, dass er, bei durchgeführter Parametrierung, die Stichprobe gut beschreiben kann. Da im vorliegenden Fall Extremwerte für die betreffende Eigenschaft ausgewählt werden und die jeweilige Stichprobe bilden, wird man häufig einen Typ der verallgemeinerten Extremwertverteilung oder die verallgemeinerte Extremwertverteilung (mit ihren drei Parametern) wählen, welche die Gumbel-Verteilung, die Weibull-Verteilung und die Fréchet-Verteilung zusammenfasst. Die häufig verwendete Gumbel-Verteilung besitzt die Form: $f \left(x\right) = exp \left[-exp\left(-\frac{x - μ}{β}\right)\right]$

Dabei bezeichnet f den Wert der Wahrscheinlichkeitsdichte als Funktion der Zufallsgröße x. Der Wert x der jeweiligen Zufallsgröße bezeichnet im vorliegenden Fall den Wert der betreffenden Eigenschaft oder den kombinierten Wert. Die Parameter *µ* und *β* werden durch das gewählte statistische Verfahren bestimmt.

Fig. 2 zeigt ein Diagramm, welches das Fitten einer Wahrscheinlichkeitsdichtefunktion f(x) an eine relative empirische Häufigkeitsverteilung von maximalen Pixelwerten schematisch darstellt, wobei mit x der Pixelwert bezeichnet ist. Auf der Abszisse sind die Pixelwerte und auf der Ordinate sind die Werte für die Wahrscheinlichkeitsdichte bzw. die relative Häufigkeit aufgetragen.

Mit der so parametrierten Wahrscheinlichkeitsdichtefunktion kann der gewünschte Schwellwert (für die vorgegebene Rate, mit der in zu untersuchenden Bildern fälschlicherweise eine Maximal-Anomalie detektiert wird bzw. mit der in zu untersuchenden Bildern richtigerweise keine Maximal-Anomalie erkannt wird) in einem weiteren Schritt bestimmt werden. Hierzu wird der Schwellwert so festgelegt, dass die Fläche unter der parametrierten Wahrscheinlichkeitsdichtefunktion oberhalb des Schwellwertes gleich der vorgegebenen Rate ist, mit der in zu untersuchenden Bildern fälschlicherweise eine Maximal-Anomalie detektiert wird, bzw. die Fläche unter der parametrierten Wahrscheinlichkeitsdichtefunktion unterhalb des Schwellwertes gleich der vorgegebenen Rate ist, mit der in zu untersuchenden Bildern richtigerweise keine Maximal-Anomalie erkannt wird. Denn diese Fläche entspricht der Wahrscheinlichkeit für das Auftreten eines Maximalwerts der betreffenden Eigenschaft in einem digitalen Bild, der größer oder gleich dem Schwellwert ist. Der Schwellwert kann durch Umstellen der Gleichung aus der Umkehrfunktion der zu der parametrierenden Wahrscheinlichkeitsdichtefunktion gehörenden Verteilungsfunktion erfolgen, falls eine geschlossene Lösung für die Umkehrfunktion existiert. Andernfalls kann die Berechnung des Schwellwertes mittels bekannter und geeigneter numerischer Verfahren erfolgen.

In Fig. 2 sind Schwellwerte X_{so,1}, X_{so,2} und X_{so,3} eingezeichnet, die einer Falsch-Positiv-Rate von 1,0 %, 0,6 % und 0,1 % entsprechen, d. h. die Flächen unter der Wahrscheinlichkeitsdichtefunktion rechts von diesen Schwellwerten ergeben die Werte 0,01, 0,006 und 0,001.

Wird anstelle der gewünschten Falsch-Positiv-Rate die Richtig-Negativ-Rate vorgegeben, so muss die Fläche unter der Wahrscheinlichkeitsdichtefunktion unterhalb des oberen Schwellwertes Xₛ in entsprechender Weise für die Berechnung des Maximal-Schwellwertes herangezogen werden.

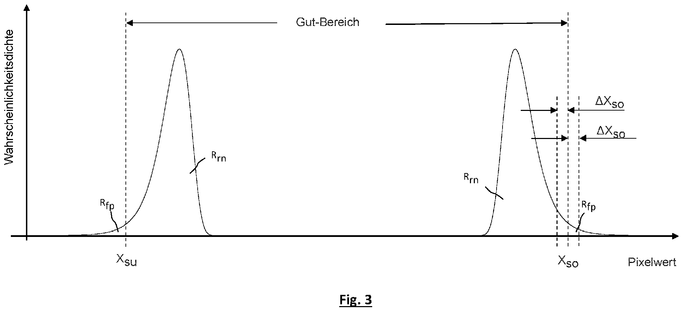

In Fig. 3 ist ein ähnliches Diagramm wie in Fig. 2 dargestellt, wobei jedoch nur der Verlauf der bereits gefitteten Wahrscheinlichkeitsdichtefunktion gezeigt ist. In diesem Beispiel wird sowohl ein Maximal-Schwellwert Xₛₒ als auch ein Minimal-Schwellwert Xₛᵤ anhand der parametrierten Wahrscheinlichkeitsdichtefunktion bestimmt. Hier wird in beiden Fällen, d.h. sowohl für die Bestimmung des Maximal-Schwellwertes als auch für die Bestimmung des Minimal-Schwellwertes, dieselbe Falsch-Positiv-Rate R_{fp} vorgegeben, wobei für die Bestimmung des Minimal-Schwellwertes Xₛᵤ die Falsch-Positiv-Rate R_{fp} gleich der Fläche unter der Wahrscheinlichkeitsdichtefunktion unterhalb des Minimal-Schwellwertes Xₛᵤ ist. Entsprechend ist die Richtig-Negativ-Rate Rᵣₙ gleich der Fläche unter der Wahrscheinlichkeitsdichtefunktion oberhalb des Minimal-Schwellwertes Xₛᵤ. Denn eine Minimal-Anomalie wird dann detektiert, wenn der Wert der betreffenden Eigenschaft bzw. der kombinierte Wert für mehrere Eigenschaften kleiner ist als der maßgebliche Minimal-Schwellwert Xₛᵤ.

Im Fall der parametrierten Wahrscheinlichkeitsdichtefunktionen gemäß Fig. 3 würde ein digitales Bild dann als eine Anomalie enthaltend detektiert werden, wenn sich für wenigstens eine Region ein Wert der betrachteten Eigenschaft oder ein kombinierter Wert für die betreffenden Eigenschaften ergibt, der außerhalb des Gut-Bereichs zwischen dem Minimal-Schwellwert und dem Maximal-Schwellwert liegt (oder mit anderen Worten, wenn der betreffende Wert kleiner oder gleich dem Minimal-Schwellwert Xₛᵤ oder größer oder gleich dem Maximal-Schwellwert Xₛₒ ist).

Weiterhin ist in Fig. 3 ein Konfidenzintervall für den Maximal-Schwellwert Xₛₒ eingezeichnet, wobei hier der Einfachheit halber ein symmetrisches Konfidenzintervall mit den Grenzen Xₛₒ - ΔXₛₒ und Xₛₒ + ΔXₛₒ angenommen wurde. Um die Fehlauswurfrate mit noch höherer Sicherheit auf den gewünschten vorgegebenen Wert zu reduzieren, kann bei der Detektion von Anomalien ein sekundärer Maximal-Schwellwert verwendet werden, der um ΔXₛₒ größer ist als der ermittelte Schwellwert Xₛₒ. In gleicher Weise kann ein sekundärer Minimal-Schwellwert verwendet werden, der um die Breite eines Konfidenzintervalls ΔXₛᵤ für den unteren Schwellwert Xₛᵤ kleiner ist als der ermittelte Schwellwert Xₛᵤ. Mit anderen Worten, der sekundäre Maximal-Schwellwert entspricht der oberen Grenze des Konfidenzintervalls für den Maximal-Schwellwert und der sekundäre Minimal-Schwellwert entspricht der unteren Grenze des Konfidenzintervalls für den Minimal-Schwellwert.

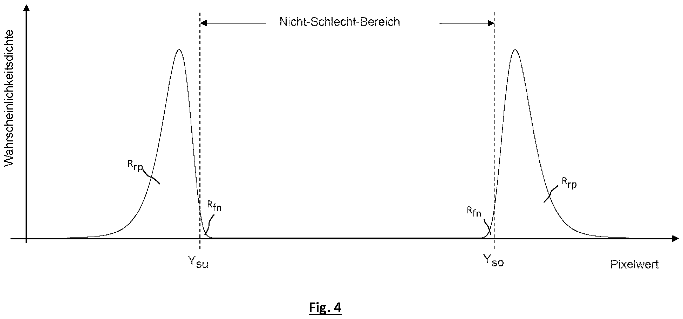

Fig. 4 zeigt ein Diagramm ähnlich dem Diagramm in Fig. 3, wobei in dem betreffenden Ausführungsbeispiel Schlechtprodukte für das Bestimmen eines bzw. der beiden Schwellwerte Xₛᵤ und Xₛₒ herangezogen werden. In diesem Fall wird jedoch in dem Verfahren zur Bestimmung des Schwellwertes die in den Anomalien der Schlechtprodukte herangezogene Information verwendet. Anstelle einer Falsch-Positiv-Rate wird hier, wie vorstehend erläutert, eine Richtig-Positiv-Rate f bzw. eine Falsch-Negativ-Rate vorgegeben.

Die beiden Schwellwerte sind in diesem Fall zur Unterscheidung als Yₛᵤ und Yₛₒ bezeichnet. Der Minimal-Schwellwert Yₛᵤ muss dabei so gewählt werden, dass die Fläche unter der Wahrscheinlichkeitsdichtefunktion oberhalb des Minimal-Schwellwertes Yₛᵤ der gewünschten Falsch-Negativ-Rate entspricht (bzw. die Fläche unter der Wahrscheinlichkeitsdichtefunktion unterhalb des Minimal-Schwellwertes Yₛᵤ der gewünschten Richtig-Positiv-Rate). In gleicher Weise muss der Maximal-Schwellwert Yₛₒ so gewählt werden, dass die Fläche unter der Wahrscheinlichkeitsdichtefunktion unterhalb des Maximal-Schwellwertes Yₛₒ der gewünschten Falsch-Negativ-Rate entspricht (bzw. die Fläche unter der Wahrscheinlichkeitsdichtefunktion oberhalb des Maximal-Schwellwertes Yₛₒ der gewünschten Richtig-Positiv-Rate). Entsprechend ergibt sich nach dem Diagramm in Fig. 4 ein Nicht-Schlecht-Bereich zwischen den beiden Schwellwerten Yₛᵤ und Yₛₒ.

Wie vorstehend ausgeführt, kann die Anzahl der digitalen Bilder für das Bestimmen des oder der Schwellwerte (Maximal- oder Minimal-Schwellwert) fest vorgegeben sein. Diese Anzahl müsste jedoch so groß gewählt werden, dass ein ausreichend zuverlässiger Schwellwert ermittelt wird.

Die Anzahl der erforderlichen digitalen Bilder kann jedoch nach einer weiteren Ausführungsform auch während des Einlernprozesses bestimmt werden. Hierzu wird wenigstens ein Abbruchkriterium festgelegt. Ausgehend von einer vorgegebenen Mindestanzahl von digitalen Bildern wird dann eine Schleife des Einlernprozesses so lange durchlaufen, bis das wenigstens eine Abbruchkriterium erfüllt ist. Nach Durchlaufen jeder Schleife kann die Anzahl der digitalen Bilder um ein oder mehrere Bilder erhöht werden. Die Schleife wird so lange ausgeführt, bis das Abbruchkriterium erfüllt oder eine vorgegebene maximal Anzahl für die digitalen Bilder erreicht ist.

Als Abbruchkriterium kann beispielsweise ein Konfidenzintervall für einen oder mehrere der Parameter der Wahrscheinlichkeitsdichtefunktion festgelegt werden, die bei der Parametrisierung bestimmt werden. Für eine sinnvolle Anwendung dieser Möglichkeit wäre allerdings Voraussetzung, dass ausreichend Erfahrungen vorhanden sind, wie sich Fehler bzw. Unsicherheiten dieser Parameter auf den zu bestimmenden Schwellwert auswirken.

Vorteilhafter ist die Bestimmung eines Konfidenzintervalls für den betreffenden Schwellwert. Hierzu kann für jeden Parameter ein Konfidenzintervall und dann die Auswirkung dieser Unsicherheit auf den Schwellwert bestimmt werden. Hierfür kann beispielsweise mittels einer Methode zur Bestimmung von Fehlerfortpflanzungen, beispielsweise der Methode der Gauß'schen Fehlerfortpflanzung, die Auswirkung des Fehlers bei der Bestimmung der Parameter (unter Verwendung der oberen und unteren Grenzen des Konfidenzintervalls für die Schwellwerte) auf die Berechnung des betreffenden Schwellwertes ermittelt werden.

Anstelle einer Fehlerfortpflanzungsmethode kann auch ein anderes geeignetes statistisches Verfahren verwendet werden, um ein Konfidenzintervall für den betreffenden Schwellwert oder auch um ein Konfidenzintervall für die vorgegebene Rate zu bestimmen. Als Beispiel hierfür sei die Bootstrapping-Methode genannt. Da es sich hierbei jedoch um bekannte mathematische Verfahren handelt, wird auf eine eingehendere Darstellung verzichtet.

Es wurde bereits vorstehend erwähnt, dass es bei der Verwendung von Gut-Prozessprodukten für das Erstellen der benötigten digitalen Bilder von Vorteil ist, wenn diejenigen Bilder, die auf in den Gut-Prozessprodukten enthaltenen Schlechtprodukten basieren, also Schlechtprodukte darstellen, bei der Bestimmung des oder der Schwellwerte außer Berücksichtigung bleiben. Dies kann dadurch erfolgen, dass die Extremwerte einer Stichprobe auf ihre Auftrittswahrscheinlichkeit hin untersucht werden. Hierzu kann die - zunächst unter Verwendung aller Extremwerte einer Stichprobe - parametrierte Wahrscheinlichkeitsdichtefunktion verwendet werden, wobei für jeden Stichprobenwert der betreffenden Stichprobe die Wahrscheinlichkeit bestimmt wird, mit der Werte auftreten, die kleiner oder gleich dem betreffenden detektierten Stichprobenwert sind, und die Wahrscheinlichkeit, mit der Werte auftreten, die größer oder gleich dem betreffenden detektierten Stichprobenwert sind. Ist eine der für einen Stichprobenwert so bestimmten Wahrscheinlichkeiten kleiner als eine vorgegebene Ausreißerschranke, so wird dieser Stichprobenwert als Ausreißer erkannt.

Anschließend kann eine erneute Parametrisierung der betreffenden Wahrscheinlichkeitsdichtefunktion durchgeführt werden, wobei als Ausreißer erkannte Stichprobenwerte nicht berücksichtigt werden (beispielsweise aus der betreffenden Liste gelöscht werden).

Dieses Verfahren kann auch iterativ durchgeführt werden, wobei die Anzahl der Durchgänge auf eine maximale Anzahl beschränkt werden kann.

Gleiches gilt selbstverständlich bei der Verwendung von Schlecht-Prozessprodukten zur Bestimmung des oder der Schwellwerte. Allerdings wird dieses Verfahren in der Praxis eher eine untergeordnete Rolle spielen, da Schlechtprodukte üblicherweise mit Absicht erzeugt werden, und es somit eher unwahrscheinlich ist, dass sich unter Schlechtprodukten ein Gutprodukt befindet, welches als Ausreißer aussortiert werden sollte.

Schließlich kann auch ein statistischer Test durchgeführt werden, der eine Aussage darüber liefert, wie gut die vorgegebene (parametrierte) Wahrscheinlichkeitsdichtefunktion die empirische Verteilung der betreffenden Stichprobenwert beschreibt. Als Beispiele für mögliche statistische Tests seien der Chi-Quadrat-Anpassungstest, der Kolmogorow-Smirnow-Anpassungstest, der Anderson-Darling-Anpassungstest, der Jarque-Bera-Anpassungstest oder der Lilliefors-Anpassungstest genannt. Liefert der Test für die jeweils ermittelte parametrierte Wahrscheinlichkeitsdichtefunktion kein zufriedenstellendes Ergebnis, d.h. liegt ein die Güte des Tests beschreibender Wert außerhalb eines vorgegebenen Zulässigkeitsbereichs, so kann eine Fehlermeldung erzeugt werden.

Es ist auch möglich, mehrere (unterschiedliche Typen von) Wahrscheinlichkeitsdichtefunktionen vorzugeben und den statistischen Test mit zwei oder mehr vorgegebenen und parametrierten Wahrscheinlichkeitsdichtefunktionen durchzuführen. Es kann dann diejenige Wahrscheinlichkeitsdichtefunktion zur Bestimmung des endgültigen Schwellwertes herangezogen werden, für die der statistische Test das beste Ergebnis liefert.

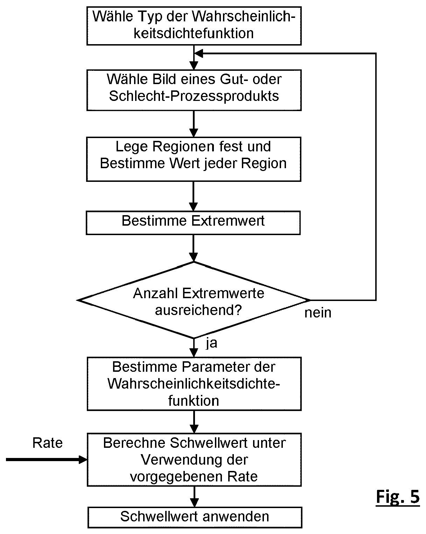

Der prinzipielle Ablauf des Verfahrens zur Bestimmung des Schwellwertes wird nachstehend nochmals kurz anhand des in Fig. 5 dargestellten vereinfachten Ablaufdiagramms erläutert. In einem ersten Schritt wird zunächst der Typ der Wahrscheinlichkeitsdichtefunktion, beispielsweise ein bestimmter Typ der verallgemeinerten Extremwertverteilung, gewählt. Im nächsten Schritt wird ein erstes Bild eines Gut- oder Schlecht-Prozessprodukts gewählt. Dieses Bild kann in dem betreffenden Schritt auch erst erzeugt werden, d.h. aufgenommen und erforderlichenfalls bearbeitet werden. Anschließend werden in einem weiteren Schritt die Regionen nach vorher vorgelegter Maßgabe festgelegt und für jede Region der Wert der betreffenden Eigenschaft der Region bestimmt, beispielsweise der maximale Pixelwert innerhalb jeder Region. Anschließend werden der oder die gewünschten Extremwerte (Maximal- und/oder Minimalwert) dieser Werte der Eigenschaft der Regionen bestimmt.

Dann wird geprüft, ob die Anzahl der so bestimmten Extremwerte (je Typ, d.h. Minimal- oder Maximalwert), welche mit der Anzahl der digitalen Bilder übereinstimmt, ausreichend ist. Beispielsweise kann dieser Test daraufhin erfolgen, ob eine vorgegebene Mindestanzahl von Maximalwerten erreicht ist.

Daraufhin werden in einem weiteren Schritt die Parameter der Wahrscheinlichkeitsdichtefunktion in einer der vorstehend beschriebenen Weisen bestimmt. Aus der so parametrisierten Wahrscheinlichkeitsdichtefunktion bzw. der zugehörigen Verteilungsfunktion kann dann in der vorgeschriebenen Weise der betreffende Schwellwert (für die Maximal- und/oder Minimalwerte) bestimmt werden, wobei hierzu eine vorgegebene Rate verwendet wird, beispielsweise eine Fehlauswurfsrate. Der Schwellwert wird also so bestimmt, dass bei der Anwendung des Verfahrens zur Detektion von Anomalien unter Verwendung des zu bestimmenden Schwellwertes die vorgegebene Rate, beispielsweise die Fehlauswurfsrate, eingehalten wird.

Nach seiner Bestimmung kann der Schwellwert bei der Durchführung des Verfahrens angewendet werden. Er kann selbstverständlich auch gespeichert, ausgegeben oder in sonstiger Weise verwendet werden.

Nach dem Schritt des Bestimmens der Parameter der Wahrscheinlichkeitsdichtefunktion kann, wie vorstehend erläutert, auch ein Test erfolgen, ob die Güte des Fits der Wahrscheinlichkeitsdichtefunktion an die Stichprobe der Extremwert bzw. Maximalwerte ausreichend ist. Falls nicht, kann die Anzahl der Maximalwerte (der digitalen Bilder) erhöht und/oder ein anderer Typ einer Wahrscheinlichkeitsdichtefunktion gewählt werden. Weiterhin kann der in der vorgeschriebenen Weise in dem Schritt des Bestimmens des Schwellwertes (oder anschließend) ein Konfidenzintervall für den Schwellwert bestimmt werden und getestet werden, ob die Breite des Konfidenzintervalls ausreichend klein ist. Falls nicht, kann die Anzahl der Stichprobenwert (Maximalwerte bzw. Extremwert) weiter erhöht werden.

Fig. 6 zeigt ein Diagramm, in welchem die Auswurfrate (im Fall von Gut-Prozessprodukten) in % in Abhängigkeit von der Zeit dargestellt ist, d.h. das Verhältnis der Bilder, in denen eine Anomalie detektiert wurde dividiert durch eine feste Anzahl (oder innerhalb einer festen Zeitspanne) der in der unmittelbaren Vergangenheit untersuchten Bilder (bzw. Produkte). In dem Diagramm sind die zur Bestimmung des betreffenden Schwellwertes - dieser wurde unter Verwendung von Gutprodukten bzw. Gut-Prozessprodukten ermittelt - vorgegebene Falsch-Positiv-Rate von 0,6 % sowie die Grenzen des Konfidenzintervalls eingetragen, wobei die obere Grenze des Konfidenzintervalls bei 0,85 % liegt und die untere Grenze bei 0,45 %. Wie aus dem Diagramm ersichtlich, schwankt die Auswurfrate über einen Zeitraum von 120 Stunden im Wesentlichen innerhalb des Konfidenzintervalls um die vorgegebene Falsch-Positiv-Rate. Dabei stellt die glattere Kurve eine über 24 Stunden ermittelte Auswurfrate dar und die unruhigere Kurve eine über eine Stunde ermittelte Auswurfrate (jeweils als gleitender Mittelwert ermittelt).

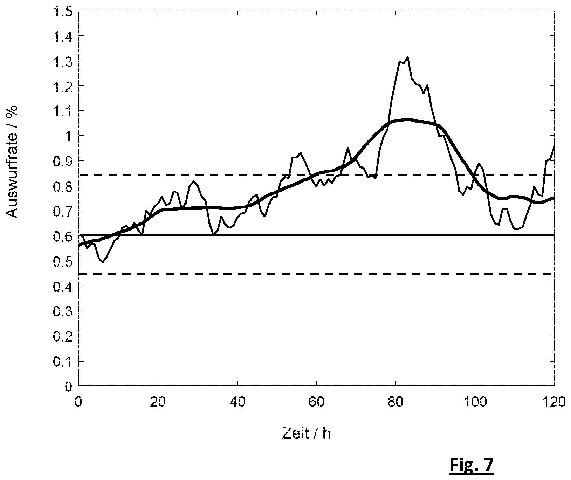

Fig. 7 zeigt ein Diagramm analog zu Fig. 6, wobei selbst die glattere Kurve in einem Bereich zwischen ca. 60 und 100 Stunden die obere Grenze des Konfidenzintervalls für die Falsch-Positive-Rate verlässt. Allerdings kann anhand dieser Kurve nicht festgestellt werden, ob es sich um korrekt detektierte Anomalien oder um falsch-positiv detektierte Anomalien handelt. Der Anstieg kann jedoch unabhängig hiervon auf ein Problem oder eine Veränderung im Prozess der Fertigung bzw. Bearbeitung der Produkte hinweisen, welche den untersuchten digitalen Bildern zugrunde liegen.

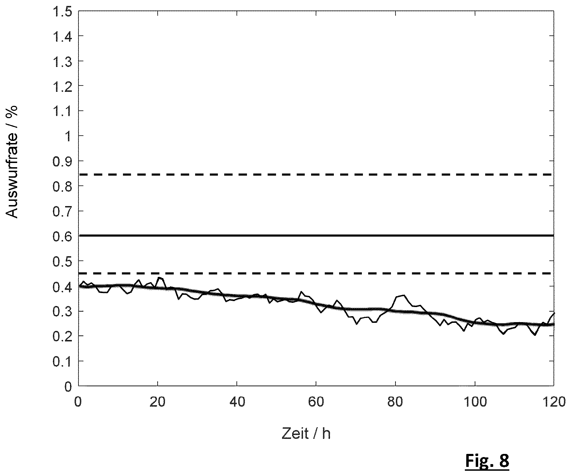

Fig. 8 zeigt ebenfalls ein Diagramm analog zu den Fig. 6 und 7, wobei jedoch die beiden Kurven (Auswurfrate bestimmt über eine Stunde bzw. 24 Stunden) deutlich unterhalb der vorgegebenen Falsch-Positiv-Rate liegen, sogar deutlich unterhalb der Untergrenze des betreffenden Konfidenzintervalls. Diese Information kann dahingehend verwendet werden, dass die vorgegebene Falsch-Positiv-Rate (bei einem Wiederholen des Lernprozesses) erhöht werden kann zugunsten einer besseren Detektion von tatsächlichen Anomalien, mit anderen Worten, das Detektionsverfahren wird empfindlicher gestaltet.

Auch könnte diese Information dahingehend interpretiert werden, dass sich die Produktionsqualität verbessert hat im Vergleich zum Zeitpunkt, zu dem eingelernt wurde. Man könnte das Einlernen also mit identischer Falsch-Positiv-Rate wiederholen und bekäme eine bessere Empfindlichkeit bei gleichzeitiger Einhaltung (aber nicht mehr deutlicher Unterschreitung) der vorgegebenen Falsch-Positiv-Rate.

Damit schafft die Erfindung ein Verfahren zur Detektion von Anomalien unter Verwendung eines Schwellwertes, wobei zur Bestimmung des Schwellwertes eine Rate vorgegeben werden kann, mit der in zu untersuchenden Bildern fälschlicherweise eine Maximal- bzw. Minimal-Anomalie detektiert werden soll, oder eine Rate, mit der in zu untersuchenden Bildern richtigerweise keine Maximal- bzw. Minimal-Anomalie erkannt werden soll (Fall der Schwellwertbestimmung unter Verwendung von Bildern von Gutprodukten oder Gut-Prozessprodukten) bzw. eine Rate, mit der in zu untersuchenden Bildern richtigerweise eine Maximal- bzw. Minimal-Anomalie detektiert werden soll, oder eine Rate, mit der in zu untersuchenden Bildern fälschlicherweise keine Maximal- bzw. Minimal-Anomalie erkannt werden soll (Fall der Schwellwertbestimmung unter Verwendung von Bildern von Schlechtprodukten oder Schlecht-Prozessprodukten).

Das Verfahren eignet sich zur Detektion von Anomalien in Bildern von Produkten, die auf beliebige Weise erzeugt werden können und die beliebige Eigenschaften der Produkte darstellen. Insbesondere eignet sich das Verfahren zur Analyse der Bilder, die mittels Inspektionsvorrichtungen gewonnen werden, die mit Röntgenstrahlung oder Terahertzstrahlung arbeiten und auf diese Weise Informationen über das Innere eines Produkts erzeugen können. Das Verfahren kann insbesondere per Software in eine Inspektionsvorrichtung implementiert werden. Das Ergebnis des Detektionsverfahrens kann genutzt werden, um weitere Vorrichtungen, beispielsweise eine Sortiervorrichtung, anzusteuern.

Die vorzugebende Rate kann fest vorgegeben sein (z.B. in der Software) oder von einem Benutzer des Verfahrens bzw. einer Vorrichtung, in der das Verfahren implementiert ist, vorgegeben werden.

Gleiches gilt für die Wahrscheinlichkeitsdichtefunktion bzw. die zugehörige Verteilungsfunktion. In einer entsprechenden Software können auch mehrere dieser Funktionen zur Auswahl durch einen Benutzer integriert sein.

Die betreffende Rate kann nicht nur Maschinen- bzw. Anlagenspezifisch vorgegeben werden, sondern z.B. auch für mehrere Maschinen bzw. Anlagen. Beispielsweise kann festgelegt werden, dass eine Rate als Gesamtrate für mehrere gleichartige (oder auch ungleichartige) Anlagen gelten soll. Der Wert der für eine Maschine oder Anlage vorgegebene Rate kann auch aus einer Angabe einer in einer Zeiteinheit entsprechend der Vorgabe detektierten Bilder/Produkte bestimmt werden, wobei hierzu noch der Durchsatz (Gesamtanzahl der Bilder/Produkte pro Zeiteinheit) bekannt sein muss.

Dieser Wert von pro Zeiteinheit entsprechend der Vorgabe detektierten Bilder/Produkten (z.B. Anzahl der Fehlauswürfe pro Stunde) kann sich wiederum aus praktischen Bedingungen ergeben. Beispielsweise können zwei Personen vorgesehen sein, die ausgeworfene Produkte prüfen, ggf. nacharbeiten und anschließend wieder in den der Detektion nachgeschalteten Prozess einschleusen. Dauert jeder dieser Vorgänge (Prüfen und ggf. Nacharbeiten) fünf Minuten, so dürfen pro Stunde maximal 24 Produkte entsprechend der betreffenden Vorgabe detektiert und ausgeworfen werden. Bei einem Durchsatz von z.B. 1200/h dürfte somit die aktuelle Auswurfrate nicht größer als 2%. Die vorgegebene Fehlauswurfrate darf somit keinesfalls größer als 2% sein, damit eine Prüfung und Nacharbeitung erfolgen kann, ohne dass sich die nachzuprüfenden und ggf. nachzuarbeitenden Produkte aufstauen.

Weiterhin ist es möglich, die aktuelle Auswurfrate zwischen zwei gleichartigen Detektionsvorrichtungen bzw. -anlagen zu vergleichen, die aus derselben Quelle gespeist werden. Ergeben sich hier gravierend unterschiedliche aktuelle Auswurfraten, deutet dies auf einen Fehler in der Detektion hin.

Abschließend sei erwähnt, dass die beiden Verfahren, nach welchen die betreffenden Schwellwerte Xₛᵤ und/oder Xₛₒ bzw. Yₛᵤ und/oder Yₛₒ ermittelt werden, auch gleichzeitig angewendet werden können, beispielsweise um zu überprüfen, ob die zur Ermittlung der Schwellwerte jeweils vorgegebene Rate einen akzeptablen Schwellwert liefert.

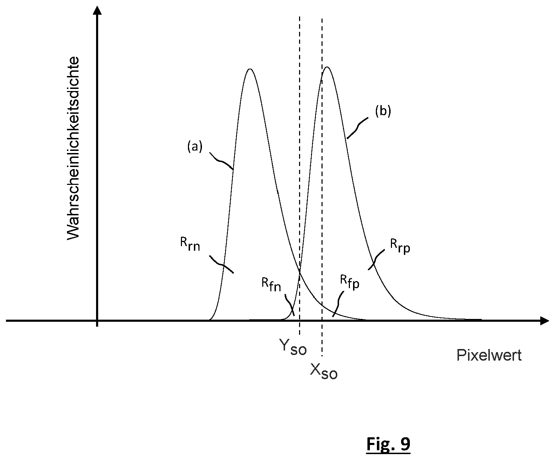

Eine solche Überprüfungsmethode wird im Folgenden unter Bezugnahme auf Fig. 9 erläutert. Fig. 9 zeigt eine Kurve (a), welche die Wahrscheinlichkeitsdichtefunktion für maximale Werte einer Eigenschaft zeigt, die unter Verwendung von digitalen Bildern von Gutprodukten (oder Gut-Prozessprodukten) bestimmt wurde, und eine zweite Wahrscheinlichkeitsdichtefunktion (Kurve (b)) für maximale Werte einer Eigenschaft, die unter Verwendung von digitalen Bildern von Schlechtprodukten (oder Schlecht-Prozessprodukten) bestimmt wurde. Aus der Wahrscheinlichkeitsdichtefunktion, welche die Kurve (a) definiert, wurde unter Verwendung der zugehörigen Falsch-Positiv-Rate (die auch als Fehlauswurfrate bezeichnet werden kann) oder auch aus der zugehörigen Falsch-Negativ-Rate der betreffende obere Schwellwert Xₛₒ ermittelt. Zudem wurde aus der Wahrscheinlichkeitsdichtefunktion, welche die Kurve (b) definiert, unter Verwendung der zugehörigen Falsch-Negativ-Rate (die auch als Fehldetektionsrate bezeichnet werden kann) oder auch aus der zugehörigen Richtig-Positiv-Rate der betreffende obere Schwellwert Yₛₒ ermittelt.

Normalerweise werden die beiden Schwellwerte Xₛₒ und Yₛₒ nicht identisch sein. Ist, wie in Fig. 9 gezeigt, der Schwellwert Xₓₒ, der aus der vorgegebenen Fehlauswurfrate ermittelt wurde, größer als der Schwellwert Yₛₒ, der aus der vorgegebenen Fehldetektionsrate ermittelt wurde, so würde dies auf einen Widerspruch hinweisen: Denn bei Verwendung des Schwellwertes Xₛₒ wäre die aus Kurve (b) resultierende Fehldetektionsrate (d.h. der Wert des Integrals über die Kurve (b) von minus unendlich bis zum Schwellwert Xₛₒ) größer als der vorgegebene Wert für die Fehldetektionsrate. Umgekehrt wäre auch bei Verwendung des Schwellwertes Yₛₒ die aus Kurve (a) resultierende Fehlauswurfrate (d.h. der Wert des Integrals über die Kurve (b) von minus unendlich bis zum Schwellwert Xₛₒ) größer als der vorgegebene Wert für die Fehldetektionsrate.

Bei der Betrachtung der Situation für die Minimal-Anomalien ergibt sich ein analoges (jedoch umgekehrtes) Bild: Ist der Schwellwert Xₛᵤ kleiner als der Schwellwert Yₛᵤ, so würde dies bedeuten, dass sich bei Verwendung des Schwellwertes Xₛᵤ aus der jeweils anderen Wahrscheinlichkeitsdichtefunktion eine Fehldetektionsrate ergäbe (d.h. ein Wert des Integrals über die mittels Schlechtprodukten bestimmte Wahrscheinlichkeitsdichtefunktion für die Minimal-Anomalien von Xₛᵤ bis plus unendlich), die höher ist als die für die Bestimmung des Schwellwertes Yₛᵤ vorgegebene Fehldetektionsrate. In gleicher Weise wäre in diesem Fall die sich aus der jeweils anderen Wahrscheinlichkeitsdichtefunktion für die Schlechtprodukte ergebende Fehlauswurfrate größer als die vorgegebene Fehlauswurfrate, wenn zu deren Berechnung der Schwellwert Yₛᵤ verwendet wird.

In einem derartigen widersprüchlichen Fall müsste letztlich unter Berücksichtigung wirtschaftlicher Bedingungen entschieden werden, ob die höhere Fehldetektionsrate (d.h. die Wahrscheinlichkeit, mit der ein Produkt mit einer Maximal-Anomalie nicht als Schlechtprodukt erkannt wird) von höherer Bedeutung ist oder die Fehlauswurfrate (d.h. die Wahrscheinlichkeit, mit der ein Gutprodukt als Schlechtprodukt erkannt wird). Als Reaktion auf einen solchen Widerspruch müsste dann die betreffende vorgegebene Rate, die als weniger wichtig eingestuft wird, derart geändert werden, dass sich ein zugehöriger Schwellwert ergibt, der nicht mehr als widersprüchlich eingestuft wird.

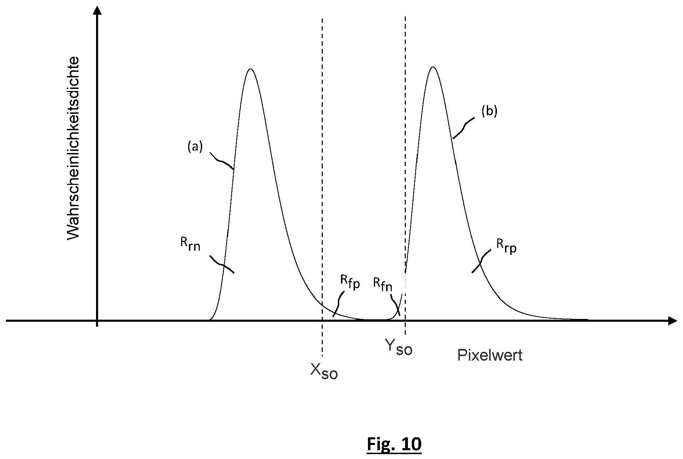

Fig. 10 zeigt eine Situation, bei der kein derartiger Widerspruch auftritt. Der Schwellwert Xₛₒ ist kleiner als der Schwellwert Yₛₒ, so dass die beiden vorgegebenen Raten gleichzeitig erfüllt werden können, da die Fehlauswurfrate und die Fehldetektionsrate jeweils Obergrenzen darstellen. Mit anderen Worten, in diesem Fall würde sich bei Verwendung des Schwellwertes, der mittels der jeweils zugehörigen Wahrscheinlichkeitsdichtefunktion unter Verwendung der betreffenden Rate berechnet wurde, zur Berechnung der jeweils anderen Rate aus der jeweils anderen Wahrscheinlichkeitsdichtefunktion herausstellen, dass die so ermittelte Rate kleiner oder gleich der Rate ist, die für die Ermittlung der jeweils anderen Wahrscheinlichkeitsdichtefunktion vorgegeben wurde, und somit in einem akzeptablen Bereich liegt.

In einem solchen Fall können jeweils eine oder beide vorgegebenen Raten so variiert werden, dass die resultierenden Schwellwerte näher zusammenrücken oder im Extremfall sogar identisch sind.

### Bezugszeichenliste

- 100: Röntgeninspektionsvorrichtung
- 102: Vorrichtung zur Detektion von Anomalien
- 104: Produkt
- 106: Fördereinrichtung
- 108: Transportband
- 110: Transportband
- 112: Transportband
- 114: Transportband
- 116: Abschirmgehäuse
- 118: Röntgenstrahlungsquelle
- 120: Röntgenstrahlungsdetektor
- 121: Röntgenstrahl
- 122: Bildverarbeitungseinheit
- 124: Anzeigeeinheit

- F: Förderrichtung
- Xₛᵤ: unterer Schwellwert (Bestimmung des Schwellwertes mittels Gutprodukten bzw. Gut-Prozessprodukten)
- Yₛᵤ: unterer Schwellwert (Bestimmung des Schwellwertes mittels Schlechtprodukten bzw. Schlecht-Prozessprodukten)
- Xₛₒ: oberer Schwellwert (Bestimmung des Schwellwertes mittels Gutprodukten bzw. Gut-Prozessprodukten)
- Yₛₒ: oberer Schwellwert (Bestimmung des Schwellwertes mittels Schlechtprodukten bzw. Schlecht-Prozessprodukten)
- ΔXₛₒ: Breite des Konfidenzintervalls für den Maximal-Schwellwert
- ΔXₛᵤ: Breite des Konfidenzintervalls für den Minimal-Schwellwert

- R_{fp}: Falsch-Positiv-Rate
- Rᵣₙ: Richtig-Negativ-Rate
- Rᵣₚ: Richtig-Positiv-Rate
- R_{fn}: Falsch-Negativ-Rate

## Patentansprüche

1. Computerimplementiertes Verfahren zur Detektion von Anomalien in digitalen Bildern von Produkten, wobei jedes digitale Bild durch eine Vielzahl von Pixeln gebildet ist, und wobei jedes Pixel einen zugeordneten Ort innerhalb des betreffenden Bildes repräsentiert und einen den betreffenden Ort charakterisierenden Wert aufweist,
(a) wobei jedes zu untersuchende Bild als eine Region aufgefasst oder in zwei oder mehrere Regionen unterteilt wird, welche jeweils aus einem oder mehreren benachbarten Pixeln bestehen,
(b) und wobei für jede Region ein Wert für wenigstens eine Eigenschaft oder ein kombinierter Wert für mehrere Eigenschaften der Region bestimmt wird,
(c) wobei eine Region als Maximal-Anomalie detektiert wird, wenn der Wert der mindestens einen Eigenschaft oder ein kombinierter Wert für mehrere Eigenschaften der Region größer ist als ein vorgegebener Maximal-Schwellwert oder ein hiervon abgeleiteter sekundärer Maximal-Schwellwert, und/oder wobei eine Region als Minimal-Anomalie detektiert wird, wenn der Wert der mindestens einen Eigenschaft oder ein kombinierter Wert für mehrere Eigenschaften der Region kleiner ist als ein vorgegebener Minimal-Schwellwert oder ein hiervon abgeleiteter sekundärer Minimal-Schwellwert,
**dadurch gekennzeichnet**,
(d) dass der Maximal-Schwellwert und/oder der Minimal-Schwellwert in einem Einlernprozess bestimmt werden, in dem folgende Schritte ausgeführt werden:
(i) Erzeugen oder Verwenden einer Anzahl von digitalen Bildern von Gutprodukten, welche keine Anomalie enthalten, oder von Gut-Prozessprodukten, welche überwiegend keine Anomalie enthalten, wobei die Anzahl der Bilder vorgegeben ist oder im Verlauf des Einlernprozesses bestimmt wird;
(ii) für jedes der digitalen Bilder, Festlegen der Region oder der Regionen und Bestimmen des Wertes der mindestens einen Eigenschaft oder des kombinierten Wertes für mehrere Eigenschaften jeder Region und Bestimmen des maximalen Wertes dieser Werte als Maximal-Stichprobenwert einer Maximalwert-Stichprobe und/oder Bestimmen des minimalen Wertes dieser Werte als Minimal-Stichprobenwert einer Minimalwert-Stichprobe;
(iii) unter Verwendung eines statistischen Schätzverfahrens, Bestimmen von Schätzwerten für alle freien, nicht vorgegebenen Parameter einer zur Beschreibung der Maximalwert-Stichprobe vorgegebenen Wahrscheinlichkeitsdichtefunktion unter Verwendung der Maximal-Stichprobenwerte und/oder Bestimmen von Schätzwerten für alle freien, nicht vorgegebenen Parameter einer zur Beschreibung der Minimalwert-Stichprobe vorgegebenen Wahrscheinlichkeitsdichtefunktion unter Verwendung der Minimal-Stichprobenwerte,
(iv) wobei die vorgegebene Wahrscheinlichkeitsdichtefunktion die verallgemeinerte Extremwertverteilung ist;
(v) Vorgeben einer ersten Rate, mit der in zu untersuchenden Bildern fälschlicherweise eine Maximal-Anomalie detektiert wird, oder einer zweiten Rate, mit der in zu untersuchenden Bildern richtigerweise keine Maximal-Anomalie erkannt wird, und/oder Vorgeben einer dritten Rate, mit der in zu untersuchenden Bildern fälschlicherweise eine Minimal-Anomalie detektiert wird, oder einer vierten Rate, mit der in einem zu Bildern richtigerweise keine Minimal-Anomalie erkannt wird,
(vi) Bestimmen des Maximal-Schwellwertes unter Verwendung der gemäß (iii) parametrierten Wahrscheinlichkeitsdichtefunktion oder einer ihr entsprechenden Verteilungsfunktion so, dass die Wahrscheinlichkeit für das Auftreten eines maximalen Wertes, der größer oder gleich dem Maximal-Schwellwert ist, der vorgegebenen ersten Rate entspricht oder dass die Wahrscheinlichkeit für das Auftreten eines maximalen Wertes, der kleiner oder gleich dem Maximal-Schwellwert ist, der vorgegebenen zweiten Rate entspricht, und/oder
(vii) Bestimmen des Minimal-Schwellwertes unter Verwendung der gemäß (iii) parametrierten Wahrscheinlichkeitsdichtefunktion oder einer dieser entsprechenden Verteilungsfunktion so, dass die Wahrscheinlichkeit für das Auftreten eines minimalen Wertes, der kleiner oder gleich dem Minimal-Schwellwert ist, der vorgegebenen dritten Rate entspricht oder dass die Wahrscheinlichkeit für das Auftreten eines minimalen Wertes, der größer oder gleich dem Minimal-Schwellwert ist, der vorgegebenen vierten Rate entspricht.

2. Computerimplementiertes Verfahren zur Detektion von Anomalien in digitalen Bildern von Produkten, wobei jedes digitale Bild durch eine Vielzahl von Pixeln gebildet ist, und wobei jedes Pixel einen zugeordneten Ort innerhalb des betreffenden Bildes repräsentiert und einen den betreffenden Ort charakterisierenden Wert aufweist,
(a) wobei jedes zu untersuchende Bild als eine Region aufgefasst oder in zwei oder mehrere Regionen unterteilt wird, welche jeweils aus einem oder mehreren benachbarten Pixeln bestehen,
(b) und wobei für jede Region ein Wert für wenigstens eine Eigenschaft oder ein kombinierter Wert für mehrere Eigenschaften der Region bestimmt wird,
(c) wobei eine Region als Maximal-Anomalie detektiert wird, wenn der Wert der mindestens einen Eigenschaft oder ein kombinierter Wert für mehrere Eigenschaften der Region größer ist als ein vorgegebener Maximal-Schwellwert oder ein hiervon abgeleiteter sekundärer Maximal-Schwellwert, und/oder wobei eine Region als Minimal-Anomalie detektiert wird, wenn der Wert der mindestens einen Eigenschaft oder ein kombinierter Wert für mehrere Eigenschaften der Region kleiner ist als ein vorgegebener Minimal-Schwellwert oder ein hiervon abgeleiteter sekundärer Minimal-Schwellwert,
**dadurch gekennzeichnet**,
(d) dass der Maximal-Schwellwert und/oder der Minimal- Schwellwert in einem Einlernprozess bestimmt werden, in dem folgende Schritte ausgeführt werden:
(i) Erzeugen oder Verwenden einer Anzahl von digitalen Bildern von Schlechtprodukten, welche jeweils wenigstens eine Anomalie enthalten, oder von Schlecht-Prozessprodukten, welche überwiegend eine Anomalie enthalten, wobei die Anzahl von Bildern vorgegeben ist oder im Verlauf des Einlernprozesses bestimmt wird;
(ii) für jedes der digitalen Bilder, Festlegen der Region oder der Regionen und Bestimmen des Wertes der mindestens einen Eigenschaft oder des kombinierten Wertes für mehrere Eigenschaften jeder Region und Bestimmen des maximalen Wertes dieser Werte als Maximal-Stichprobenwert einer Maximalwert-Stichprobe und/oder Bestimmen des minimalen Wertes dieser Werte als Minimal-Stichprobenwert einer Minimalwert-Stichprobe;
(iii) unter Verwendung eines statistischen Schätzverfahrens, Bestimmen von Schätzwerten für alle freien, nicht vorgegebenen Parameter einer zur Beschreibung der Maximalwert-Stichprobe vorgegebenen Wahrscheinlichkeitsdichtefunktion unter Verwendung der Maximal-Stichprobenwerte und/oder Bestimmen von Schätzwerten für alle freien, nicht vorgegebenen Parameter einer zur Beschreibung der Minimalwert-Stichprobe vorgegebenen Wahrscheinlichkeitsdichtefunktion unter Verwendung der Minimal-Stichprobenwerte;
(iv) wobei die vorgegebene Wahrscheinlichkeitsdichtefunktion die verallgemeinerte Extremwertverteilung ist;
(v) Vorgeben einer fünften Rate, mit der in zu untersuchenden Bildern richtigerweise eine Maximal-Anomalie detektiert wird, oder einer sechsten Rate, mit der in zu untersuchenden Bildern fälschlicherweise keine Maximal-Anomalie erkannt wird, und/oder Vorgeben einer siebten Rate, mit der in zu untersuchenden Bildern richtigerweise eine Minimal-Anomalie detektiert wird, oder einer achten Rate, mit der in zu untersuchenden Bildern fälschlicherweise keine Minimal-Anomalie erkannt wird,
(vi) Bestimmen des Maximal-Schwellwertes unter Verwendung der gemäß (iii) parametrierten Wahrscheinlichkeitsdichtefunktion oder einer ihr entsprechenden Verteilungsfunktion so, dass die Wahrscheinlichkeit für das Auftreten eines maximalen Wertes, der kleiner oder gleich dem Maximal-Schwellwert ist, der vorgegebenen sechsten Rate entspricht oder dass die Wahrscheinlichkeit für das Auftreten eines maximalen Wertes, der größer oder gleich dem Maximal-Schwellwert ist, der vorgegebenen fünften Rate entspricht, und/oder
(vii) Bestimmen des Minimal-Schwellwertes unter Verwendung der gemäß (iii) parametrierten Wahrscheinlichkeitsdichtefunktion oder einer dieser entsprechenden Verteilungsfunktion so, dass die Wahrscheinlichkeit für das Auftreten eines minimalen Wertes, der größer oder gleich dem Minimal-Schwellwert ist, der vorgegebenen achten Rate entspricht oder dass die Wahrscheinlichkeit für das Auftreten eines minimalen Wertes, der kleiner oder gleich dem Minimal-Schwellwert ist, der vorgegebenen siebten Rate entspricht.

3. Verfahren nach Anspruch 1 oder 2, **dadurch gekennzeichnet,**
(a) **dass** das Festlegen der Region oder der Regionen unter Verwendung eines Basis-Schwellwertes erfolgt, wobei jedes isolierte Pixel und jede Gruppe von benachbarten Pixeln, deren Pixelwert jeweils größer ist als der Basis-Schwellwert, jeweils einer Region einer ersten Gruppe von Regionen zugeordnet werden, und/oder wobei jedes isolierte Pixel und jede Gruppe von benachbarten Pixeln, deren Pixelwert jeweils kleiner oder gleich dem Basis-Schwellwert ist, jeweils einer Region einer zweiten Gruppe von Regionen zugeordnet werden, oder
(b) **dass** das Festlegen der Region oder der Regionen unter Verwendung einer geometrischen Maske erfolgt, insbesondere einer fix vorgegebenen Maske oder einer mittels Bildverarbeitung aus dem jeweiligen Bild erzeugten Maske.

4. Verfahren nach einem der vorhergehenden Ansprüche, **dadurch gekennzeichnet, dass** als Eigenschaft einer Region eine geometrische Eigenschaft verwendet wird, die aus der Ortsinformation der Pixel der Region ermittelt wird, insbesondere die Fläche, der Umfang oder der Durchmesser, oder dass als Eigenschaft einer Region eine Pixelwert-Eigenschaft verwendet wird, die aus den Werten der Pixel der Region ermittelt wird, insbesondere der Maximalwert oder der Minimalwert aller Pixel der Region, der Mittelwert, die Varianz oder Standardabweichung.

5. Verfahren nach einem der vorhergehenden Ansprüche, **dadurch gekennzeichnet, dass** die im Verlauf des Einlernprozesses zu bestimmende Anzahl von digitalen Bildern von Gutprodukten, Gut-Prozessprodukten, Schlechtprodukten oder Schlecht-Prozessprodukten unter Verwendung mindestens eines Abbruchkriteriums bestimmt wird, wobei die aktuelle Anzahl von digitalen Bildern so lange erhöht wird, bis das mindestens eine Abbruchkriterium erfüllt ist.

6. Verfahren nach Anspruch 5, **dadurch gekennzeichnet, dass** das mindestens eine Abbruchkriterium durch ein Konfidenzintervall für wenigstens einen Parameter der betreffenden Wahrscheinlichkeitsdichtefunktion gebildet ist oder daraus abgeleitet wird.

7. Verfahren nach Anspruch 5, **dadurch gekennzeichnet, dass** das mindestens eine Abbruchkriterium gebildet ist durch ein Schwellwert-Konfidenzintervall für den Minimal-Schwellwert oder den Maximal-Schwellwert, wobei das Schwellwert-Konfidenzintervall bestimmt wird durch das Bestimmen eines Konfidenzintervalls für jeden Parameter und das Bestimmen der Auswirkung dieser Konfidenzintervalle auf das Schwellwert-Konfidenzintervall, insbesondere unter Verwendung der Methode der Fehlerfortpflanzung, insbesondere der Methode der Gauß'schen Fehlerfortpflanzung.

8. Verfahren nach Anspruch 5, **dadurch gekennzeichnet, dass** das mindestens eine Abbruchkriterium gebildet ist durch ein Schwellwert-Konfidenzintervall für den Minimal-Schwellwert oder Maximal-Schwellwert, wobei das betreffende Konfidenzintervall mittels eines statistischen Verfahrens bestimmt wird, insbesondere unter Verwendung der Bootstrapping-Methode.

9. Verfahren nach einem der vorhergehenden Ansprüche, **dadurch gekennzeichnet, dass** unter Verwendung der betreffenden Wahrscheinlichkeitsdichtefunktion und der betreffenden Parameter für jeden detektierten Maximal-Stichprobenwert und/oder Minimal-Stichprobenwert die Wahrscheinlichkeit bestimmt wird, mit welcher Werte auftreten, die kleiner oder gleich dem betreffenden detektierten Maximal-Stichprobenwert oder Minimal-Stichprobenwert sind, und die Wahrscheinlichkeit, mit welcher Werte auftreten, die größer oder gleich dem betreffenden detektierten Maximal-Stichprobenwert oder Minimal-Stichprobenwert sind, und dass die Parameter für die Wahrscheinlichkeitsdichtefunktion neu bestimmt werden, wenn für wenigstens einen der detektierten Maximal-Stichprobenwerte oder Minimal-Stichprobenwerte eine der beiden jeweils so bestimmten Wahrscheinlichkeiten kleiner ist als eine vorgegebene Ausreißerschranke, wobei bei der Neubestimmung diese Maximal-Stichprobenwerte oder Minimal-Stichprobenwerte unberücksichtigt bleiben.

10. Verfahren nach einem der vorhergehenden Ansprüche, **dadurch gekennzeichnet, dass** ein statistischer Test durchgeführt wird, welcher eine Aussage darüber liefert, ob die jeweils vorgegebene Wahrscheinlichkeitsdichtefunktion unter Verwendung der hierfür ermittelten Schätzwerte für die Parameter die empirische Verteilung in Form der betreffenden detektierten Maximal-Stichprobenwerte oder Minimal-Stichprobenwerte hinreichend genau beschreibt.

11. Verfahren nach Anspruch 10, **dadurch gekennzeichnet, dass** die Schätzung der Parameter, vorzugsweise nach dem Detektieren einer vorgegebenen Mindestanzahl von Maximal-Stichprobenwerten oder Minimal-Stichprobenwerten, für eine Mehrzahl von vorgegebenen unterschiedlichen Wahrscheinlichkeitsdichtefunktionen durchgeführt wird, dass für jede der so bestimmten Wahrscheinlichkeitsdichtefunktionen der statistische Test durchgeführt wird und dass für das weitere Verfahren diejenige Wahrscheinlichkeitsdichtefunktion als vorgegebene Wahrscheinlichkeitsdichtefunktion verwendet wird, für welche der statistische Test das zutreffendste Ergebnis liefert.

12. Verfahren nach einem der vorhergehenden Ansprüche 7 bis 11, **dadurch gekennzeichnet, dass** aus den Grenzen des Konfidenzintervalls für den Maximal-Schwellwert und/oder den Minimal-Schwellwert ein Konfidenzintervall oder eine Fehlergrenze für die betreffende vorgegebene Rate bestimmt wird.

13. Verfahren nach Anspruch 12, **dadurch gekennzeichnet, dass** das Konfidenzintervall und/oder die Fehlergrenze für die betreffende vorgegebene Rate zur Überwachung und/oder Steuerung von Vorrichtungen oder einer gesamten Produktionslinie ausgegeben werden, die zur Herstellung, Bearbeitung oder Prüfung der Produkte dienen.

14. Verfahren nach einem der vorhergehenden Ansprüche, **dadurch gekennzeichnet, dass** ein sekundärer Maximal-Schwellwert ermittelt wird, wobei der sekundäre Maximal-Schwellwert innerhalb der Grenzen eines für den Maximal-Schwellwert bestimmten Konfidenzintervalls oder gleich einer Grenze dieses Konfidenzintervalls gewählt wird und/oder dass ein sekundärer Minimal-Schwellwert ermittelt wird, wobei der sekundäre Minimal-Schwellwert innerhalb der Grenzen eines für den Minimal-Schwellwert bestimmten Konfidenzintervalls oder gleich einer Grenze dieses Konfidenzintervalls gewählt wird.

15. Verfahren nach einem der vorhergehenden Ansprüche, **dadurch gekennzeichnet, dass** die vorgegebene Wahrscheinlichkeitsdichtefunktion in Form der verallgemeinerten Extremwertverteilung die Gumbel-Verteilung, die Weibull-Verteilung oder die Fréchet-Verteilung ist.

16. Vorrichtung zur Detektion von Anomalien in digitalen Bildern von Produkten, mit einer Datenverarbeitungseinrichtung, welche dazu ausgebildet ist, digitale Bilddaten von digitalen Bildern von Produkten zu erhalten und zu verarbeiten, wobei die Datenverarbeitungseinrichtung dazu ausgebildet ist, das Verfahren nach einem der vorhergehenden Ansprüche auszuführen.

17. Computerprogrammprodukt zur Detektion von Anomalien in digitalen Bildern von Produkten, welches Befehle umfasst, die bei der Ausführung der Befehle durch eine Datenverarbeitungseinrichtung diese veranlassen, das Verfahren nach einem der Ansprüche 1-15 auszuführen.

## Claims

1. Computer-implemented method for detecting anomalies in digital images of products, wherein each digital image is formed by a plurality of pixels, and wherein each pixel represents an associated location within the respective image and has a value characterizing the respective location,
(a) wherein each image to be examined is regarded as one region or is divided into two or more regions, each consisting of one or more adjacent pixels,
(b) and wherein for each region a value for at least one property or a combined value for multiple properties of the region is determined,
(c) wherein a region is detected as a maximum anomaly if the value of the at least one property, or a combined value for multiple properties, of the region is greater than a predetermined maximum threshold value or a secondary maximum threshold value derived therefrom, and/or wherein a region is detected as a minimum anomaly if the value of the at least one property, or a combined value for multiple properties, of the region is smaller than a predetermined minimum threshold value or a secondary minimum threshold value derived therefrom,
**characterized in that**
(d) the maximum threshold value and/or the minimum threshold value are determined in a learning process in which the following steps are carried out:
(i) generating or using a number of digital images of good products which contain no anomaly, or of good process products which predominantly contain no anomaly, wherein the number of images is predetermined or is determined in the course of the learning process;
(ii) for each of the digital images, defining the region or regions and determining the value of the at least one property, or the combined value for multiple properties, of each region, and determining the maximum value of these values as the maximum sample value of a maximum value sample, and/or determining the minimum value of these values as the minimum sample value of a minimum value sample;
(iii) using a statistical estimation method, determining estimated values for all free, non-predetermined parameters of a probability density function predetermined for describing the maximum value sample, using the maximum sample values, and/or determining estimated values for all free, non-predetermined parameters of a probability density function predetermined for describing the minimum value sample, using the minimum sample values;
(iv) wherein the predetermined probability density function is the generalized extreme value distribution;
(v) presetting a first rate at which a maximum anomaly is incorrectly detected in images to be examined, or a second rate at which no maximum anomaly is correctly detected in images to be examined, and/or predetermining a third rate at which a minimum anomaly is incorrectly detected in images to be examined, or a fourth rate at which no minimum anomaly is correctly detected in images to be examined;
(vi) determining the maximum threshold value using the probability density function parameterized according to (iii), or a distribution function corresponding thereto, such that the probability of occurrence of a maximum value greater than or equal to the maximum threshold value corresponds to the predetermined first rate, or such that the probability of occurrence of a maximum value less than or equal to the maximum threshold value corresponds to the predetermined second rate, and/or
(vii) determining the minimum threshold value using the probability density function parameterized according to (iii), or a distribution function corresponding thereto, such that the probability of occurrence of a minimum value less than or equal to the minimum threshold value corresponds to the predetermined third rate, or such that the probability of occurrence of a minimum value greater than or equal to the minimum threshold value corresponds to the predetermined fourth rate.

2. Computer-implemented method for detecting anomalies in digital images of products, wherein each digital image is formed by a plurality of pixels, and wherein each pixel represents an associated location within the respective image and has a value characterizing the respective location,
(a) wherein each image to be examined is regarded as one region or is divided into two or more regions, each consisting of one or more adjacent pixels,
(b) and wherein for each region a value for at least one property or a combined value for multiple properties of the region is determined,
(c) wherein a region is detected as a maximum anomaly if the value of the at least one property, or a combined value for multiple properties, of the region is greater than a predetermined maximum threshold value or a secondary maximum threshold value derived therefrom, and/or wherein a region is detected as a minimum anomaly if the value of the at least one property, or a combined value for multiple properties, of the region is smaller than a predetermined minimum threshold value or a secondary minimum threshold value derived therefrom,
**characterized in that**
(d) the maximum threshold value and/or the minimum threshold value are determined in a learning process in which the following steps are carried out:
(i) generating or using a number of digital images of bad products which each contain at least one anomaly, or of bad process products which predominantly contain an anomaly, wherein the number of images is predetermined or is determined in the course of the learning process;
(ii) for each of the digital images, defining the region or regions and determining the value of the at least one property, or the combined value for multiple properties, of each region, and determining the maximum value of these values as the maximum sample value of a maximum value sample, and/or determining the minimum value of these values as the minimum sample value of a minimum value sample;
(iii) using a statistical estimation method, determining estimated values for all free, non-predetermined parameters of a probability density function predetermined for describing the maximum value sample, using the maximum sample values, and/or determining estimated values for all free, non-predetermined parameters of a probability density function predetermined for describing the minimum value sample, using the minimum sample values;
(iv) wherein the predetermined probability density function is the generalized extreme value distribution;
(v) presetting a fifth rate at which a maximum anomaly is correctly detected in images to be examined, or a sixth rate at which no maximum anomaly is incorrectly detected in images to be examined, and/or predetermining a seventh rate at which a minimum anomaly is correctly detected in images to be examined, or an eighth rate at which no minimum anomaly is incorrectly detected in images to be examined;
(vi) determining the maximum threshold value using the probability density function parameterized according to (iii), or a distribution function corresponding thereto, such that the probability of occurrence of a maximum value less than or equal to the maximum threshold value corresponds to the predetermined sixth rate, or such that the probability of occurrence of a maximum value greater than or equal to the maximum threshold value corresponds to the predetermined fifth rate, and/or
(vii) determining the minimum threshold value using the probability density function parameterized according to (iii), or a distribution function corresponding thereto, such that the probability of occurrence of a minimum value greater than or equal to the minimum threshold value corresponds to the predetermined eighth rate, or such that the probability of occurrence of a minimum value less than or equal to the minimum threshold value corresponds to the predetermined seventh rate.

3. Method according to claim 1 or 2,
**characterized in that**
(a) the region or regions are defined using a base threshold value, wherein each isolated pixel and each group of adjacent pixels whose pixel value is in each case greater than the base threshold value are each assigned to a region of a first group of regions, and/or wherein each isolated pixel and each group of adjacent pixels whose pixel value is in each case less than or equal to the base threshold value are each assigned to a region of a second group of regions, or
(b) the region or regions are defined using a geometric mask, in particular a fixed predetermined mask or a mask generated from the respective image by means of image processing.

4. Method according to any one of the preceding claims, **characterized in that** a geometric property of a region, determined from the location information of the pixels of the region, in particular the area, the circumference or the diameter, is used as the property of a region, or **in that** a pixel-value property of a region, determined from the values of the pixels of the region, in particular the maximum value or the minimum value of all pixels of the region, the mean value, the variance or the standard deviation, is used as the property of a region.

5. Method according to any one of the preceding claims, **characterized in that** the number of digital images of good products, good process products, bad products or bad process products to be determined in the course of the learning process is determined using at least one termination criterion, wherein the current number of digital images is increased until the at least one termination criterion is fulfilled.

6. Method according to claim 5, **characterised in that** the at least one termination criterion is formed by, or derived from, a confidence interval for at least one parameter of the respective probability density function.

7. Method according to claim 5, **characterized in that** the at least one termination criterion is formed by a threshold-value confidence interval for the minimum threshold value or the maximum threshold value, wherein the threshold-value confidence interval is determined by determining a confidence interval for each parameter and determining the effect of these confidence intervals on the threshold-value confidence interval, in particular using the method of error propagation, in particular the Gaussian error propagation method.

8. Method according to claim 5, **characterized in that** the at least one termination criterion is formed by a threshold-value confidence interval for the minimum threshold value or maximum threshold value, wherein the respective confidence interval is determined by means of a statistical method, in particular using the bootstrapping method.

9. Method according to any one of the preceding claims, **characterized in that**, using the respective probability density function and the respective parameters, for each detected maximum sample value and/or minimum sample value the probability is determined with which values occur that are less than or equal to the respective detected maximum sample value or minimum sample value, and the probability with which values occur that are greater than or equal to the respective detected maximum sample value or minimum sample value, and **in that** the parameters for the probability density function are redetermined if, for at least one of the detected maximum sample values or minimum sample values, one of the two respective probabilities determined in this way is smaller than a predetermined outlier limit, wherein these maximum sample values or minimum sample values remain disregarded in the redetermination.

10. Method according to any one of the preceding claims, **characterized in that** a statistical test is carried out which provides an indication as to whether the respective predetermined probability density function, using the estimated values determined for its parameters, describes the empirical distribution in the form of the respective detected maximum sample values or minimum sample values with sufficient accuracy.

11. Method according to claim 10, **characterized in that** the estimation of the parameters, preferably after detection of a predetermined minimum number of maximum sample values or minimum sample values, is carried out for a plurality of predetermined different probability density functions, **in that** the statistical test is carried out for each of the probability density functions so determined, and **in that**, for the further method, that probability density function is used as the predetermined probability density function for which the statistical test gives the most appropriate result.

12. Method according to any one of claims 7 to 11, **characterized in that** a confidence interval or an error limit for the respective predetermined rate is determined from the limits of the confidence interval for the maximum threshold value and/or the minimum threshold value.

13. Method according to claim 12, **characterized in that** the confidence interval and/or the error limit for the respective predetermined rate are output for monitoring and/or controlling devices, or an entire production line, used for manufacturing, processing or testing the products.

14. Method according to any one of the preceding claims, **characterized in that** a secondary maximum threshold value is determined, wherein the secondary maximum threshold value is selected within the limits of a confidence interval determined for the maximum threshold value, or equal to a limit of this confidence interval, and/or **in that** a secondary minimum threshold value is determined, wherein the secondary minimum threshold value is selected within the limits of a confidence interval determined for the minimum threshold value, or equal to a limit of this confidence interval.

15. Method according to any one of the preceding claims, **characterized in that** the predetermined probability density function is in the form of the generalized extreme value distribution, the Gumbel distribution, the Weibull distribution or the Fréchet distribution.

16. Apparatus for detecting anomalies in digital images of products, comprising a data processing device which is adapted to obtain and process digital image data of digital images of products, wherein the data processing device is adapted to carry out the method according to any one of the preceding claims.

17. Computer program product for detecting anomalies in digital images of products, comprising instructions which, when executed by a data processing device, cause the device to carry out the method according to any one of claims 1 to 15.

## Revendications

1. Procédé mis en œuvre par ordinateur permettant de détecter des anomalies dans des images numériques de produits, dans lequel chaque image numérique est formée d'une pluralité de pixels, et dans lequel chaque pixel représente un emplacement associé au sein de l'image concernée et présente une valeur caractérisant l'emplacement concerné,
(a) dans lequel chaque image à analyser est considérée comme une région ou divisée en deux régions ou plus, qui sont respectivement constituées d'un ou plusieurs pixels adjacents,
(b) et dans lequel, pour chaque région, une valeur pour au moins une propriété ou une valeur combinée pour plusieurs propriétés de la région est déterminée,
(c) dans lequel une région est détectée comme une anomalie maximale lorsque la valeur de l'au moins une propriété ou une valeur combinée de plusieurs propriétés de la région est supérieure à un seuil maximal prédéfini ou à un seuil maximal secondaire dérivé de celui-ci, et/ou dans lequel une région est détectée comme une anomalie minimale lorsque la valeur de l'au moins une propriété ou une valeur combinée de plusieurs propriétés de la région est inférieure à un seuil minimal prédéfini ou à un seuil minimal secondaire dérivé de celui-ci,
**caractérisé en ce**
(d) **que** le seuil maximal et/ou le seuil minimal sont déterminés dans un processus d'apprentissage, dans lequel les étapes suivantes sont exécutées :
(i) génération ou utilisation d'un nombre d'images numériques de produits conformes, qui ne contiennent aucune anomalie, ou de produits en cours de fabrication conformes, qui ne contiennent, pour l'essentiel, aucune anomalie, dans lequel le nombre d'images est prédéfini ou déterminé au cours du processus d'apprentissage ;
(ii) pour chacune des images numériques, établissement de la ou des régions et détermination de la valeur de l'au moins une propriété ou de la valeur combinée de plusieurs propriétés de chaque région, puis détermination de la valeur maximale de ces valeurs comme valeur maximale d'échantillon d'un échantillon de valeur maximale et/ou détermination de la valeur minimale de ces valeurs comme valeur minimale d'échantillon d'un échantillon de valeur minimale ;
(iii) à l'aide d'un procédé d'estimation statistique, détermination d'estimations pour tous les paramètres libres, non prédéfinis, d'une fonction de densité de probabilité prédéfinie permettant de décrire l'échantillon de valeur maximale à l'aide des valeurs maximales d'échantillon, et/ou détermination d'estimations pour tous les paramètres libres, non prédéfinis d'une fonction de densité de probabilité prédéfinie permettant de décrire l'échantillon de valeur minimale, à l'aide des valeurs minimales d'échantillon,
(iv) dans lequel la fonction de densité de probabilité prédéfinie est la distribution des valeurs extrêmes généralisée ;
(v) prédéfinition d'un premier taux auquel une anomalie maximale est détectée à tort dans les images à analyser, ou d'un deuxième taux auquel aucune anomalie maximale n'est reconnue à juste titre dans les images à analyser, et/ou définition d'un troisième taux, auquel une anomalie minimale est détectée à tort dans les images à analyser, ou d'un quatrième taux, auquel aucune anomalie minimale n'est reconnue à juste titre dans les images à analyser,
(vi) détermination de la valeur seuil maximale à l'aide de la fonction de densité de probabilité paramétrée conformément au point (iii) ou d'une fonction de distribution qui lui correspond, de telle sorte que la probabilité pour l'apparition d'une valeur maximale, qui est supérieure ou égale à la valeur seuil maximale, corresponde au premier taux prédéfini, ou que la probabilité pour l'apparition d'une valeur maximale, qui est inférieure ou égale à la valeur seuil maximale corresponde au deuxième taux prédéfini, et/ou
(vii) détermination de la valeur seuil minimale à l'aide de la fonction de densité de probabilité paramétrée conformément au point (iii) ou d'une fonction de distribution qui lui correspond, de telle sorte que la probabilité pour l'apparition d'une valeur minimale, qui est inférieure ou égale à la valeur seuil minimale, corresponde au troisième taux prédéfini, ou que la probabilité pour l'apparition d'une valeur minimale, qui est supérieure ou égale à la valeur seuil minimale correspond au quatrième taux prédéfini.

2. Procédé mis en œuvre par ordinateur permettant de détecter des anomalies dans des images numériques de produits, dans lequel chaque image numérique est formée d'une pluralité de pixels, et dans lequel chaque pixel représente un emplacement associé au sein de l'image concernée et présente une valeur caractérisant l'emplacement concerné,
(a) dans lequel chaque image à analyser est considérée comme une région ou divisée en deux régions ou plus, qui sont respectivement constituées d'un ou plusieurs pixels adjacents,
(b) et dans lequel, pour chaque région, une valeur pour au moins une propriété ou une valeur combinée pour plusieurs propriétés de la région est déterminée,
(c) dans lequel une région est détectée comme une anomalie maximale lorsque la valeur de l'au moins une propriété ou une valeur combinée de plusieurs propriétés de la région est supérieure à un seuil maximal prédéfini ou à un seuil maximal secondaire dérivé de celui-ci, et/ou dans lequel une région est détectée comme une anomalie minimale lorsque la valeur de l'au moins une propriété ou une valeur combinée de plusieurs propriétés de la région est inférieure à un seuil minimal prédéfini ou à un seuil minimal secondaire dérivé de celui-ci,
**caractérisé en ce**
(d) **que** le seuil maximal et/ou le seuil minimal sont déterminés dans un processus d'apprentissage, dans lequel les étapes suivantes sont exécutées :
(i) génération ou utilisation d'un nombre d'images numériques de produits non conformes, qui contiennent respectivement au moins une anomalie, ou de produits en cours de fabrication non conformes, qui contiennent, pour l'essentiel, une anomalie, dans lequel le nombre d'images est prédéfini ou déterminé au cours du processus d'apprentissage ;
(ii) pour chacune des images numériques, établissement de la ou des régions et détermination de la valeur de l'au moins une propriété ou de la valeur combinée de plusieurs propriétés de chaque région, puis détermination de la valeur maximale de ces valeurs comme valeur maximale d'échantillon d'un échantillon de valeur maximale et/ou détermination de la valeur minimale de ces valeurs comme valeur minimale d'échantillon d'un échantillon de valeur minimale ;
(iii) à l'aide d'un procédé d'estimation statistique, détermination d'estimations pour tous les paramètres libres, non prédéfinis, d'une fonction de densité de probabilité prédéfinie permettant de décrire l'échantillon de valeur maximale à l'aide des valeurs maximales d'échantillon, et/ou détermination d'estimations pour tous les paramètres libres, non prédéfinis d'une fonction de densité de probabilité prédéfinie permettant de décrire l'échantillon de valeur minimale, à l'aide des valeurs minimales d'échantillon ;
(iv) dans lequel la fonction de densité de probabilité prédéfinie est la distribution des valeurs extrêmes généralisée ;
(v) prédéfinition d'un cinquième taux auquel une anomalie maximale est détectée à juste titre dans les images à analyser, ou d'un sixième taux auquel aucune anomalie maximale n'est reconnue à tort dans les images à analyser, et/ou définition d'un septième taux, auquel une anomalie minimale est détectée à juste titre dans les images à analyser, ou d'un huitième taux, auquel aucune anomalie minimale n'est reconnue à tort dans les images à analyser,
(vi) détermination de la valeur seuil maximale à l'aide de la fonction de densité de probabilité paramétrée conformément au point (iii) ou d'une fonction de distribution qui lui correspond, de telle sorte que la probabilité pour l'apparition d'une valeur maximale, qui est inférieure ou égale à la valeur seuil maximale, corresponde au sixième taux prédéfini, ou que la probabilité pour l'apparition d'une valeur maximale, qui est supérieure ou égale à la valeur seuil maximale corresponde au cinquième taux prédéfini, et/ou
(vii) détermination de la valeur seuil minimale à l'aide de la fonction de densité de probabilité paramétrée conformément au point (iii) ou d'une fonction de distribution qui lui correspond, de telle sorte que la probabilité pour l'apparition d'une valeur minimale, qui est supérieure ou égale à la valeur seuil minimale, corresponde au huitième taux prédéfini, ou que la probabilité pour l'apparition d'une valeur minimale, qui est inférieure ou égale à la valeur seuil minimale correspond au septième taux prédéfini.

3. Procédé selon la revendication 1 ou 2, **caractérisé en ce**
(a) **que** l'établissement de la ou des régions s'effectue à l'aide d'une valeur seuil de base, dans lequel chaque pixel isolé et chaque groupe de pixels adjacents dont la valeur de pixel est respectivement supérieure à la valeur seuil de base sont attribués respectivement à une région d'un premier groupe de régions, et/ou dans lequel chaque pixel isolé et chaque groupe de pixels adjacents dont la valeur de pixel est respectivement inférieure ou égale à la valeur seuil de base sont respectivement associés à une région d'un deuxième groupe de régions, ou
(b) **que** l'établissement de la ou des régions s'effectue à l'aide d'un masque géométrique, en particulier d'un masque prédéfini de manière fixe ou d'un masque généré à partir de l'image respective par le biais d'un traitement d'image.

4. Procédé selon l'une des revendications précédentes, **caractérisé en ce que,** en guise de propriété d'une région, une propriété géométrique est utilisée, qui est spécifiée à partir des informations d'emplacement des pixels de la région, en particulier la surface, le périmètre ou le diamètre, ou **en ce que**, en guise de propriété d'une région, une propriété de valeur de pixel est utilisée, qui est spécifiée à partir des valeurs des pixels de la région, en particulier la valeur maximale ou la valeur minimale de tous les pixels de la région, la moyenne, la variance ou l'écart-type.

5. Procédé selon l'une des revendications précédentes, **caractérisé en ce que** le nombre d'images numériques de produits conformes, de produits conformes en cours de fabrication, de produits non conformes ou de produits en cours de fabrication non conformes, à déterminer au cours du processus d'apprentissage, est déterminé à l'aide d'au moins un critère d'arrêt, dans lequel le nombre actuel d'images numériques est augmenté jusqu'à ce que l'au moins un critère d'arrêt soit satisfait.

6. Procédé selon la revendication 5, **caractérisé en ce que** l'au moins un critère d'arrêt est formé d'un intervalle de confiance pour au moins un paramètre de la fonction de densité de probabilité concernée, ou est dérivé de celui-ci.

7. Procédé selon la revendication 5, **caractérisé en ce que** l'au moins un critère d'arrêt est formé d'un intervalle de confiance de valeur seuil pour la valeur seuil minimale ou la valeur seuil maximale, dans lequel l'intervalle de confiance de valeur seuil est déterminé par la détermination d'un intervalle de confiance pour chaque paramètre et la détermination de l'effet de ces intervalles de confiance sur l'intervalle de confiance de valeur seuil, en particulier à l'aide de la méthode de propagation des erreurs, en particulier la méthode de propagation des erreurs de Gauss.

8. Procédé selon la revendication 5, **caractérisé en ce que** l'au moins un critère d'arrêt est formé d'un intervalle de confiance de valeur seuil pour la valeur seuil minimale ou la valeur seuil maximale, dans lequel l'intervalle de confiance concerné est déterminé par le biais d'un procédé statistique, en particulier à l'aide de la méthode de rééchantillonnage.

9. Procédé selon l'une des revendications précédentes, **caractérisé en ce que,** à l'aide de la fonction de densité de probabilité concernée et des paramètres concernés, pour chaque valeur d'échantillon maximale et/ou valeur d'échantillon minimale détectée, est déterminée la probabilité avec laquelle apparaissent des valeurs qui sont inférieures ou égales à la valeur d'échantillon maximale ou valeur d'échantillon minimale détectée concernée, ainsi que la probabilité avec laquelle apparaissent des valeurs qui sont supérieures ou égales à la valeur d'échantillon maximale ou valeur d'échantillon minimale détectée concernée, et que les paramètres pour la fonction de densité de probabilité sont déterminés à nouveau si, pour au moins l'une des valeurs d'échantillon maximales ou valeurs d'échantillon minimales détectées, l'une des deux probabilités respectivement ainsi déterminées est inférieure à une limite de valeur aberrante prédéfinie, dans lequel ces valeurs d'échantillon maximales ou valeurs d'échantillon minimales ne sont pas prises en compte lors de cette nouvelle détermination.

10. Procédé selon l'une des revendications précédentes,
**caractérisé en ce qu'**un test statistique est exécuté, lequel donne un message établissant si la fonction de densité de probabilité respectivement prédéfinie décrit de manière suffisamment exacte la distribution empirique sous la forme des valeurs d'échantillon maximales ou valeurs d'échantillon minimales détectées concernées à l'aide des valeurs d'estimation spécifiées dans ce but pour le paramètre.

11. Procédé selon la revendication 10, **caractérisé en ce que** l'estimation des paramètres est exécutée, de préférence après la détection d'un nombre minimal prédéfini de valeurs d'échantillon maximales ou valeurs d'échantillon minimales, pour une pluralité de fonctions de densité de probabilité différentes prédéfinies, que, pour chacune des fonctions de densité de probabilité ainsi déterminées, le test statistique est exécuté, et que, pour la suite du procédé, la fonction de densité de probabilité pour laquelle le test statistique donne le résultat le plus pertinent est utilisée comme fonction de densité de probabilité prédéfinie.

12. Procédé selon l'une des revendications 7 à 11 précédentes,
**caractérisé en ce qu'**un intervalle de confiance ou une marge d'erreur pour le taux prédéfini concerné est déterminé à partir des limites de l'intervalle de confiance pour la valeur seuil maximale et/ou la valeur seuil minimale.

13. Procédé selon la revendication 12, **caractérisé en ce que** l'intervalle de confiance et/ou la marge d'erreur pour le taux prédéfini concerné sont communiqués en vue de la surveillance et/ou de la commande de dispositifs ou d'une ligne de production complète servant à la fabrication, à l'usinage ou à la vérification des produits.

14. Procédé selon l'une des revendications précédentes,
**caractérisé en ce qu'**une valeur seuil maximale secondaire est spécifiée, dans lequel la valeur seuil maximale secondaire est choisie dans les limites d'un intervalle de confiance déterminé pour la valeur seuil maximale ou égale à une limite de cet intervalle de confiance, et/ou **en ce qu'**une valeur seuil minimale secondaire est spécifiée, dans lequel la valeur seuil minimale secondaire est choisie dans les limites d'un intervalle de confiance déterminé pour la valeur seuil minimale ou égale à une limite de cet intervalle de confiance.

15. Procédé selon l'une des revendications précédentes, **caractérisé en ce que** la fonction de densité de probabilité prédéfinie, sous la forme d'une distribution de valeurs extrêmes généralisée, est la distribution de Gumbel, la distribution de Weibull ou la distribution de Fréchet.

16. Dispositif de détection d'anomalies dans des images numériques de produits, comportant un équipement de traitement de données qui est conçu pour recevoir et traiter des données d'images numériques d'images numériques de produits, dans lequel l'équipement de traitement de données est conçu pour mettre en œuvre le procédé selon l'une des revendications précédentes.

17. Produit de programme informatique destiné à la détection d'anomalies dans des images numériques de produits, lequel comprend des instructions qui, lors de la mise en œuvre des instructions par un équipement de traitement de données, amènent ce dernier à mettre en œuvre le procédé selon l'une des revendications 1 à 15.
